# EUROPEAN PATENT SPECIFICATION

(11) **EP 1 144 079 B1**
(45) Date of publication and mention of the grant of the patent: **03.11.2004**
(21) Application number: 99963005.6
(22) Date of filing: 03.12.1999
(51) Int. Cl.: F01M 13/04

(54) **AEROSOL SEPARATOR; AND METHOD**
VERFAHREN UND VORRICHTUNG ZUR TRENNUNG VON AEROSOLEN
SEPARATEUR D'AEROSOL ET METHODE D'UTILISATION

(30) Priority: 04.12.1998 US 205468
(43) Date of publication of application: 17.10.2001
(73) Proprietor: DONALDSON COMPANY, INC., Minneapolis, MN 55440-1299 (US)
(72) Inventor: GIESEKE, Steven, S., Richfield, MN 55423 (US); DUSHEK, Robert, A., Richfield, MN 55423 (US); THEYS, Steven, B-3220 Holsbeek (BE)
(74) Representative: Eisenführ, Speiser & Partner
(86) International application number: PCT/US1999/028724
(87) International publication number: WO 2000/032295

(56) References cited:
- DE-A- 19 619 770
- DE-U- 29 714 886
- US-A- 4 692 175
- US-A- 5 800 587

## Description

### Technical Field

This disclosure relates to systems for separating hydrophobic fluids (such as oils) which are entrained as aerosols, from gas streams (for example, air streams). Preferred arrangements also provide for filtration of other fine contaminants, for example carbon material, from the gas streams.

### Background

US-A-4,692,175 discloses filtering means for filtering, coalescing and separating loose or liquid oil and water and oil and water in aerosol or vapor state from contaminated compressed gas. In particular, a filter arrangement is disclosed comprising a housing construction defining an interior and having a gas flow inlet, a gas flow outlet, and a liquid flow outlet; a first stage coalescer filter comprising a media of knitted wire mesh; said first stage coalescer filter being operably positioned in said interior; said media having a first upstream surface area; a second stage filter element operably positioned in said interior.

Certain gas streams in other environements, such as blow-by gases from diesel engines, carry substantial amounts of entrained oils therein, as aerosol. The majority of the oil droplets within the aerosol are generally within the size of 0.1-5.0 µm.

In addition, such gas streams also carry substantial amounts of fine contaminant, such as carbon contaminants. Such contaminants generally have an average particle size of about 0.5-3.0 µm.

In some systems, it is desirable to vent such gases to the atmosphere. In general, it is preferred that before the gases are vented to the atmosphere, they be cleaned of a substantial portion of the aerosol and/or organic particulate contaminants therein.

In other instances, it is desirable to direct the air or gas stream into equipment. When such is the case, it may be desirable to separate aerosol and/or particulates from the stream during the circulation, in order to provide such benefits as: reduced negative effects on the downstream equipment; improved efficiency; recapture of otherwise lost oils; and/or to address environmental concerns.

A variety of efforts have been directed to the above types of concerns. The variables toward which improvements are desired generally concern the following: (a) size/efficiency concerns; that is, a desire for good efficiency of separation while at the same time avoidance of a requirement for a large separator system; (b) cost/efficiency; that is, a desire for good or high efficiency without the requirement of substantially expensive systems; (c) versatility; that is, development of systems that can be adapted for a wide variety of applications and uses, without significant re-engineering; and, (d) cleanability/regeneratability; that is, development of systems which can be readily cleaned (or regenerated) if such becomes desired, after prolonged use.

### Summary of the Disclosure

The present invention proposes certain improved filter designs comprising the features claimed in the independent claims.

In particular, a filter arrangement is provided that includes a first stage coalescer filter and a second stage filter element downstream from the coalescer filter. Preferably, the first stage coalescer filter comprises a non-woven fibrous media. The second stage filter element will preferably include pleated media. Preferred constructions will include at least a first baffle member positioned at a location to block a direct straight line gas flow from the first stage coalescer filter to the second stage filter element.

In some arrangements, the baffle member will be secured to the second stage filter element to direct fluid flow from the first stage coalesce filter to the pleated media. In other arrangements, the baffle member will be secured to the first stage coalescer filter.

In preferred embodiments, the second stage filter element comprises a panel filter. The panel filter preferably has an outer, perimeter gasket, a media screen positioned in covering relation to the pleated filter media. Some embodiments include a first fluid impermeable baffle plate. In many preferred arrangements, there is also a second fluid impermeable baffle plate.

In some arrangements, the first stage coalescer filter includes first and second frame pieces that are constructed and arranged to interlock. In preferred embodiments, there is a first screen member within the periphery of the first frame piece, and a second screen member within a second periphery of the second frame piece. Preferably, there is also a projection arrangement extending from a rim of the second frame piece. Further, there is preferably a seal member circumscribing the first and second frame pieces.

### Brief Description of the Drawings

Fig. 1 is a schematic view of an engine system using a filter arrangement constructed according to principles of this disclosure;
Fig. 2 is a perspective view of an embodiment of a filter arrangement, according to the disclosure of U.S. patent application S.N. 09/205,468;
Fig. 3 is a top plan view of the embodiment depicted in Fig. 2;
Fig. 4 is a cross-sectional view of the filter arrangement taken along the line 4-4 of Fig. 3;
Fig. 5 is an end elevational view of the filter arrangement depicted in Fig. 2;
Fig. 6 is a top plan view of the first stage filter media construction usable in the filter arrangement depicted in Fig. 2;
Fig. 7 is a side elevational view of the first stage filter media construction shown in Fig. 6;
Fig. 8 is a bottom plan view of the first stage filter media construction depicted in Fig. 6;
Fig. 9 is a schematic, cross-sectional view of a filter arrangement constructed according to principles of this disclosure;
Fig. 10 is a top plan view of a first stage filter media construction usable in the filter arrangement depicted in Fig. 9;
Fig. 11 is a cross-sectional view of the first stage filter media construction depicted in Fig. 10 and taken along the line 11-11;
Fig. 12 is a schematic, exploded, perspective view of the first stage filter media construction depicted in Figs. 10 and 11;
Fig. 13 is a schematic, perspective view of a second stage filter media construction usable in the filter arrangement depicted in Fig. 9;
Fig. 14 is a schematic, cross-sectional view of the second stage filter arrangement depicted in Fig. 13 and taken along the line 14-14 in Fig. 13;
Fig. 15 is an enlarged, schematic, cross-sectional view of a seal member and frame construction used in the second stage filter media construction of Fig. 14; and
Fig. 16 is an enlarged, perspective view of one of the frame pieces for the first stage filter media construction of Figs. 10-12.

### Detailed Description

### 1. A Typical Application - Engine Crankcase Breather Filter

Pressure-charged diesel engines often generate "blow-by" gases, i.e., a flow of air-fuel mixture leaking past pistons from the combustion chambers. Such "blow-by gases" generally comprise a gas phase, for example air or combustion off gases, carrying therein: (a) oil or fuel aerosol principally comprising 0.1-5.0 µm droplets; and, (b) carbon contaminant from combustion, typically comprising carbon particles, a majority of which are about 0.1-10 µm in size. Such "blow-by gases" are generally directed outwardly from the engine block, through a blow-by vent.

Herein when the term "hydrophobic" fluids is used in reference to the entrained liquid aerosol in gas flow, reference is meant to nonaqueous fluids, especially oils. Generally such materials are immiscible in water. Herein the term "gas" or variants thereof, used in connection with the carrier fluid, refers to air, combustion off gases, and other carrier gases for the aerosol.

The gases may carry substantial amounts of other components. Such components may include, for example; copper, lead, silicone, aluminum, iron, chromium, sodium; molybdenum, tin, and other heavy metals.

Engines operating in such systems as trucks, farm machinery, boats, buses, and other systems generally comprising diesel engines, may have significant gas flows contaminated as described above. For example, flow rates and volumes on the order of 0-85 m³/h, typically 8,5-17 m³/h (0-50 cfm (typically 5 to 10 cfm)) are fairly common.

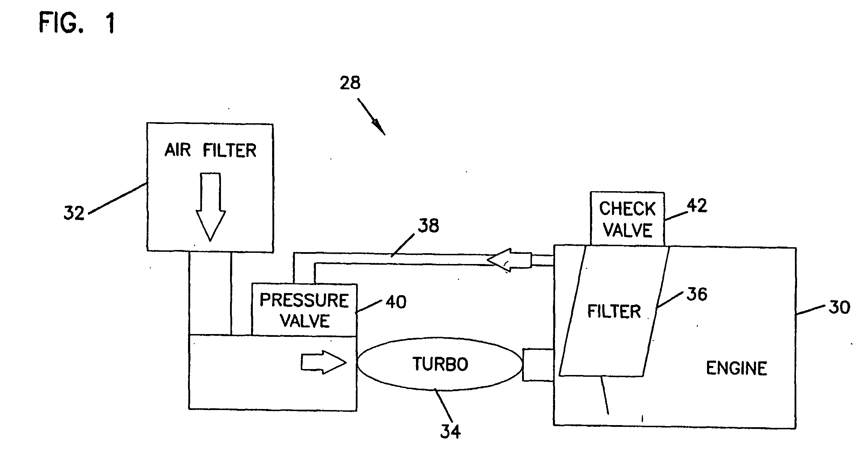

Fig. 1 illustrates a schematic indicating a typical system 28 in which a coalescer/separator arrangement according to the present invention would be utilized. Referring to Fig. 1, block 30 represents a turbocharged diesel engine. Air is taken to the engine 30 through an air filter 32. Air filter or cleaner 32 cleans the air taken in from the atmosphere. A turbo 34 draws the clean air from the air filter 32 and pushes it into engine 30. While in engine 30, the air undergoes compression and combustion by engaging with pistons and fuel. During the combustion process, the engine 30 gives off blow-by gases. A filter arrangement 36 is in gas flow communication with engine 30 and cleans the blow-by gases. From filter arrangement 36, the air is directed through channel 38 and through a pressure valve 40. From there, the air is again pulled through by the turbo 34 and into the engine 30. Regulator valve or pressure valve 40 regulates the amount of pressure in the engine crankcase 30. Pressure valve 40 opens more and more, as the pressure in the engine crankcase increases, in order to try to decrease the pressure to an optimal level. The pressure valve 40 closes to a smaller amount when it is desirable to increase the pressure within the engine. A check valve 42 is provided, such that when the pressure exceeds a certain amount in the engine crankcase 30, the check valve 42 opens to the atmosphere, to prevent engine damage.

According to this disclosure, the filter arrangement 36 for separating a hydrophobic liquid phase from a gaseous stream (sometimes referred to herein as a coalescer/separator arrangement) is provided. In operation, a contaminated gas flow is directed into the coalescer/separator arrangement 36. Within the arrangement 36, the fine oil phase or aerosol phase (i.e., hydrophobic phase) coalesces. The arrangement 36 is constructed so that as the hydrophobic phase coalesces into droplets, it will drain as a liquid such that it can readily be collected and removed from the system. With preferred arrangements as described hereinbelow, the coalescer or coalescer/ separator, especially with the oil phase in part loaded thereon, operates as a prefilter for carbon contaminant carried in the gas stream. Indeed, in preferred systems, as the oil is drained from the system, it will provide some self-cleaning of the coalescer because the oil will carry therein a portion of the trapped carbon contaminant.

### II. An Example of a Multi-Stage Oil Aerosol Separator According to Application S.N. 09/205,468.

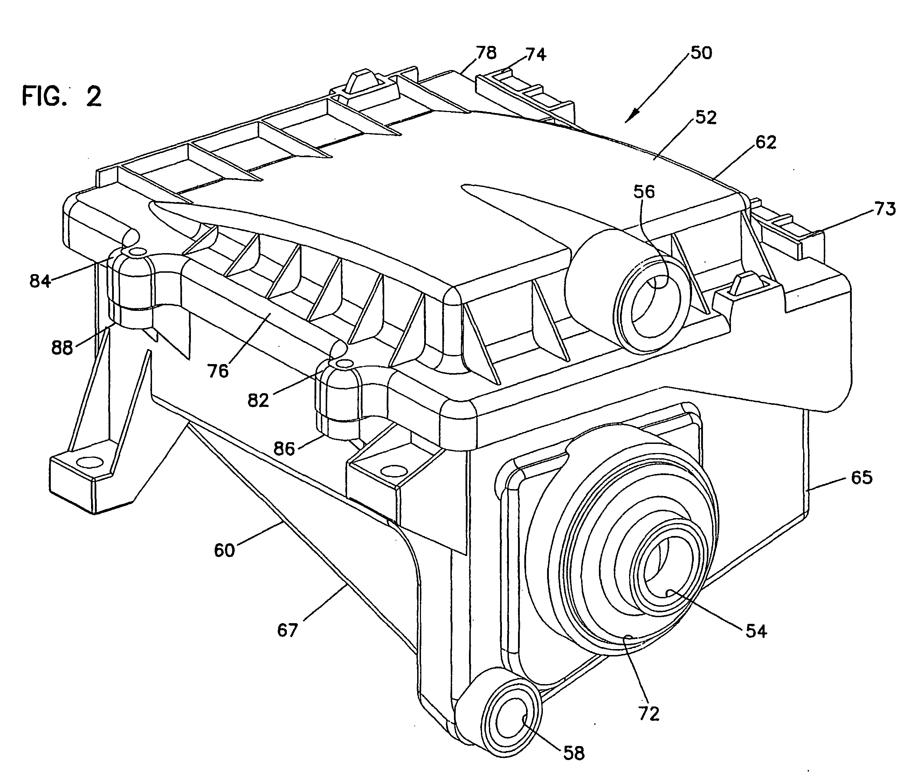

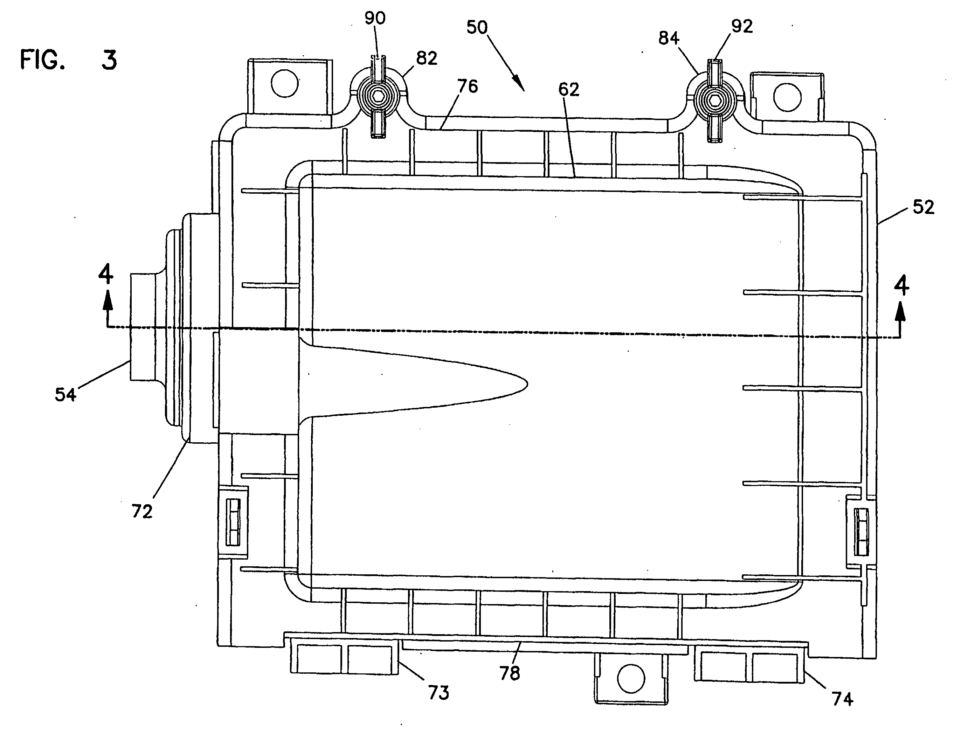

Referring to FIG. 2, one example of filter arrangement 36 is depicted at reference numeral 50. The coalescer filter construction 50 includes a housing 52. The housing 52 depicted is generally rectangular in plan view, FIG. 3, and with sloped portions to help direct fluid flow (i.e., gas and liquid, therethrough). In certain instances, the housing 52 represents a convenient shape, as characterized below. The depicted housing 52 has a two-piece construction. More specifically, housing 52 comprises a cover or door 62 mounted on a body or shell section 60.

Referring to FIGS. 2 and 5, the housing 52 includes the following 3 ports: gas low inlet port 54; gas flow outlet port 56; and liquid flow outlet port or liquid drain 58.

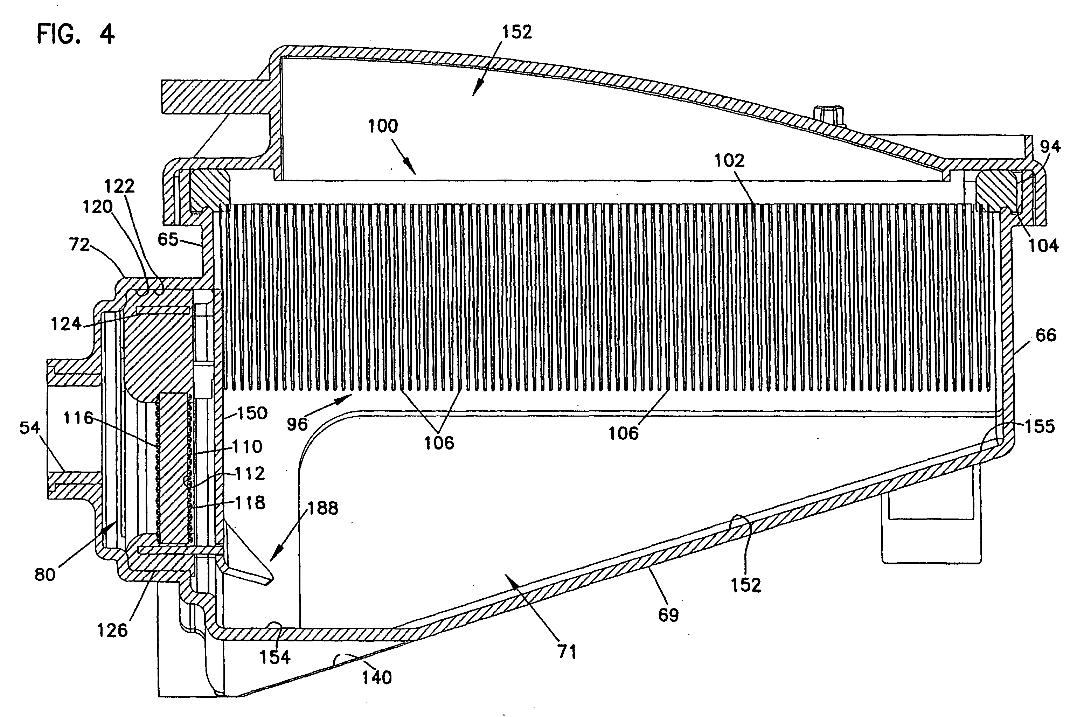

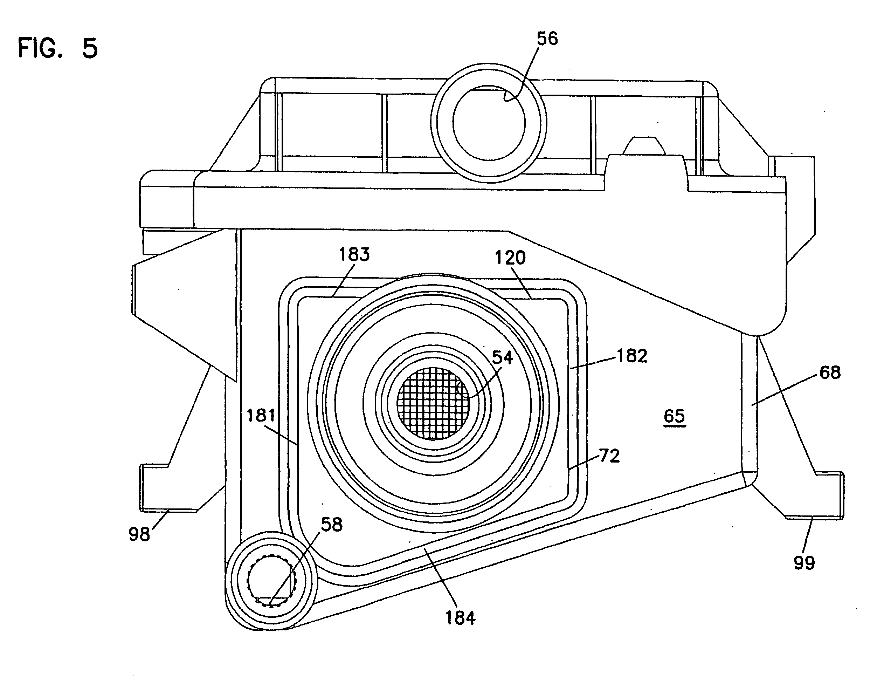

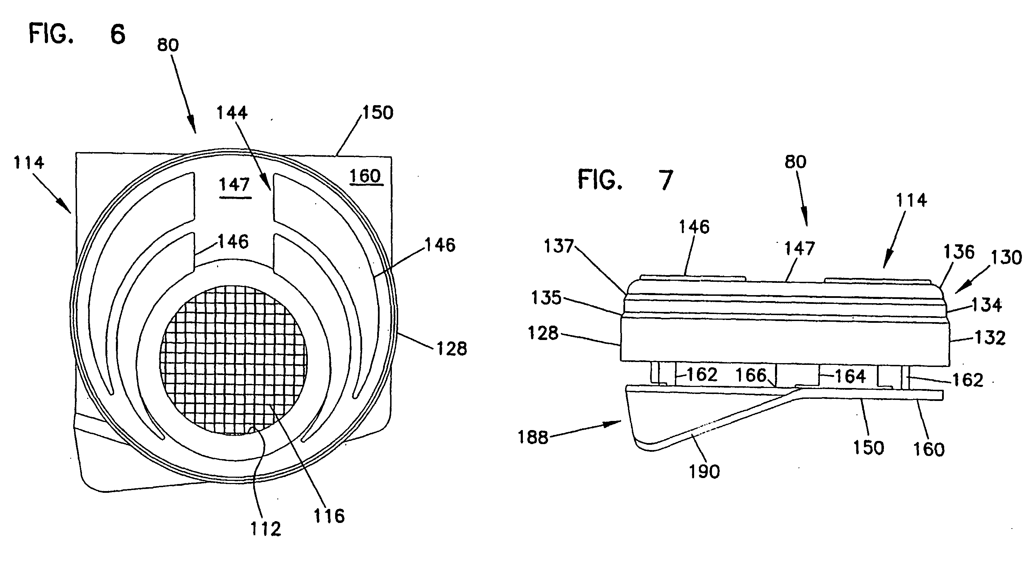

Attention is now directed to FIGS. 2, 4, and 5, where the housing body 60 is depicted. The body 60 includes front wall 65, rear wall 66 (FIG. 4), first side wall 67 (FIG. 2), second side wall 68 (FIG. 5), and back wall 69 (FIG. 4). Walls 65, 66, 67, 68 project from a periphery of back wall 69 to form a receptacle construction 71 (FIG. 4). In use, various filter arrangements described below are positioned within receptacle 71.

Referring now to FIGS. 2 and 5, it can be seen that the gas flow inlet port 54 is positioned to extend into the front wall 65. More specifically, the gas flow inlet port 54 is directed into a receiver 72.

Receiver 72 defines a volume projecting outwardly from selected portions of the front wall 65. The volume of the receiver 72 is sized for receiving a coalescer filter 80 (FIG. 6) therein. Inlet port 54 is directed into the volume of the receiver 72 in order to direct gas flow entering the coalescer filter construction 50 through the coalescer filter 80, in a manner described below.

The filter construction 50 includes a good, secure construction retaining door 62 on the body 60. In particular, door 62 includes hinge tabs formed integrally thereon. The hinge tabs are sized to be received within receivers 73 and 74 respectively, when the door 62 is mounted on the body 60. The receivers 73 and 74 allow the tabs to pivot, as the door 62 is swung between an open and closed position. When the door 62 is in a closed position, FIG. 2, receivers 73 and 74 secure the hinge tabs snugly, so that the door 62 cannot readily separate from the body 60 even under the pressures of the blow by gasses.

Door 62 includes an opposite side edge 76 from edge 78. Along this edge, door 62 includes retaining tabs 82 and 84 aligned with retaining tabs 86 and 88, respectfully, in body 60. The retaining tabs 82, 84, 86, 88 preferably include apertures having threaded metal inserts to prevent wear and stripping of the threads. To secure the door 62 closed, the filter construction 50 includes thumb bolts 90 and 92, FIG. 3, extending through the apertures of the retaining tabs 82, 84, 86, 88. After the door 62 is appropriately positioned, it can be secured and closed by threading the thumb bolts 90, 92 through the tabs 82, 84, 86, 88 until the thumb bolts 90 and 92 bottom out. A gas flow seal between the door 62 and the body 60 is provided by a gasket 94, FIG. 4.

Gasket 94 may comprise a variety of polymeric materials moldable to form an appropriate gasket member, with a filter media 96 potted therein. One useful material is polyurethane such as that described in commonly assigned U. S. Patent No. 5,669,949 for end cap 3. Material for gasket 94 includes the following polyurethane, processed to an end product (soft urethane foam) having an "as molded" density of 224-352 kg/m³ (14-22 lbs/ft³) and which exhibits a softness such that a 25% deflection requires about a 480 bar (10 psi) pressure. In some embodiments, the "as molded" density varies from the 224-352 kg/m³ (14-22 lbs/ ft³) range. The polyurethane comprises a material made with I35453R resin and I305OU isocyanate. The materials should be mixed in a mix ratio of 100 parts I35453 resin to 36.2 parts 13050U isocyanate (by weight). The specific gravity of the resin is 1.04 kg/ℓ (8.7 lbs/gallon) and for the isocyanate it is 1.20 kg/ℓ (10 lbs/gallon). The materials are typically mixed with a high dynamic shear mixer. The component temperatures should be 21-35°C (70-95°F). The mold temperatures should be 46-57°C (115-135°F).

The resin material 135453R has the following description:
(a) Average molecular weight
   1) Base polyether polyol = 500-15,000
   2) Diols = 60-10,000
   3) Triols = 500-15,000
(b) Average functionality
   1) total system = 1.5-3.2
(c) Hydroxyl number
   1) total systems = 100-300
(d) Catalysts
   1) amine = Air Products 0.1-3.0 PPH
   2) tin = Witco 0.01-0.5 PPH
(e) Surfactants
   1) total system = 0.1 -2.0 PPH
(f) Water
   1) total system = 0.03-3.0 PPH
(g) Pigments/dyes
   1) total system = 1-5% carbon black
(h) Blowing agent
   1) 0.1-6.0% HFC 134A.

The I3050U isocyanate description is as follows:
(a) NCO content - 22.4-23.4 wt%
(b) Viscosity, cps at 25°C = 600-800
(c) Density = 1.21 g/cm³ at 25°C
(d) Initial boiling pt. - 190°C at 5mm Hg
(e) Vapor pressure = 0.0002 Hg at 25°C
(f) Appearance - colorless liquid
(g) Flash point (Densky-Martins closed cup) = 200°C.

The materials I35453R and I3050U are available from BASF Corporation, Wyandotte, Michigan 48192.

In reference again to FIG. 5, note that the body 60 has a pair of feet 98, 99, depending therefrom. The feet 98, 99, in preferred constructions, have apertures with, preferably, threaded metal inserts. The feet 98, 99 are provided to allow the filter construction 50 to be secured in a convenient location, for example, on an engine frame.

The housing 52 includes, enclosed therein, two filter constructions; the upstream coalescer filter 80 and a downstream panel filter 100 (FIG. 4). While in some embodiments, the coalescer filter 80 and panel filter 100 can be constructed adjoined to one another, in the embodiment shown, the coalescer filter 80 and the panel filter 100 are separate, independent members or constructions.

Referring now to FIG. 4, the panel filter 100 comprises pleated media 96, positioned in a generally rectangular configuration. Media 96 is circumscribed by outer, rectangular gasket 94. The panel filter 100 may include a screen 102 with an optional handle construction, such as pull tabs.

Preferably, body 60 includes a perimeter trough 104 therein (FIG. 4), sized and configured to receive the gasket 94. FIG. 4 shows the panel filter 100 seated within the trough 104 and held by the body 60. Sealing is provided between the door 62 and the body 60 by compressing the gasket 94 into the perimeter trough 104 as the door 62 is closed.

As can be seen in FIG. 4, the panel filter 100 is sized and configured so that the longitudinal pleats 106 of the media 96 extend between the sidewalls 67 (FIG. 2), 68 (FIG. 5) of the body 60. The pleats 106, in the arrangement shown, are oriented normal from a downstream face 110 of the coalescer filter 80.

Attention is now directed to the coalescer filter 80, FIGS. 6-8. The coalescer filter 80 preferably comprises polyester fibrous media 112, oriented in a generally circular patch or configuration. The media 112 is held and encapsulated by a frame or housing construction 114, which is preferably a single or unitary molded housing molded around the media 112.

Referring now to FIG. 4, a cross-section of the coalescer filter 80 is shown. The coalescer filter 80 preferably includes a pair of liners or screens 116, 118. The screens 116, 118 are positioned on both the upstream and downstream side of the media 112 and help to support the media 112. The screens 116, 118 may comprise perforated metal, expanded metal, or nonmetallic materials such as plastic or carbon-filled nylon. Preferably, nonmetallic materials, such as the carbon-filled nylon, are used such that the coalescer filter 80 is readily incineratable. Preferably, the coalescer filter 80 will comprise at least 90%, more preferably at least 95%, and most preferably up to 100% nonmetallic materials.

As mentioned above, preferably the coalescer housing 114 is constructed of a compressible material. As such, it can be placed within an appropriate receptacle in the filter construction 50 and form a seal between the coalescer 80 and the receptacle in the filter construction 50. More specifically, the receiver 72, FIG. 4, defines a cavity or receptacle 120 therein. In the embodiment shown, the cavity 120 takes the shape of the coalescer filter 80, and in this embodiment, is circular.

Preferably, the coalescer filter 80 includes a support structure molded within the housing 114. The support structure functions to provide a backstop to the compression of the housing 114 with the inner wall 122 of the cavity 120. In the embodiment shown, the support structure preferably comprises a rigid support ring 124 molded within the housing. The support ring 124 preferably comprises a circular band embedded within the housing 114 and spaced from the outermost periphery 128 (FIGS. 6 and 7) of the circular housing 114.

When the coalescer filter 80 is positioned within the cavity 120, the housing 114. is compressed between and against the support ring 124 and the inner wall 122 to form a radial seal 126 therebetween.

Attention is directed to FIG. 7. In FIG. 7, it can be seen that the housing 114 preferably includes a nonlinear profile at the periphery 128. In particular, the periphery 128 includes a step construction 130. In particular, in the embodiment shown, there is a first region of largest diameter at 132. This first region of largest diameter 132 corresponds to a region that is furthest downstream, when oriented within the construction 50. Adjacent to the first region 132, is a second region of largest diameter 134. The second region 134 has a diameter smaller than the first region 132 and is immediately adjacent to the first region 132. As such, there is a step 135 in between these two regions. Most upstream is a region of third diameter 136. The third region 136 has a diameter that is smaller than the second region 134, and, of course, smaller than the first region 132. The third region 136 is immediately adjacent to the second region 134, and due to the differences, in diameter, there is a step 137 formed therebetween. This stepped construction 130 helps with the insertion and formation of the radial seal 126 between the coalescer filter 80 and the receiver 72.

Preferably, the housing 114 is constructed of compressible material, for example, foamed polyurethane. One preferred foamed polyurethane would be the same as the foamed polyurethane described above for the perimeter gasket 94 and as described in U.S. Patent No. 5,669,949 for end cap 3. When installing the coalescer 80 in the receptacle or cavity 120 to form a radial seal at 126, there preferably is a compression of at least 10%, no greater than about 50%, more preferably between 15 and 40%, and most preferably about 20% against the inner support ring 494.

Still referring to FIG. 6, note that the media 112, in the example embodiment shown, comprises a circular region or patch. It preferably is positioned at the lowermost part of the coalescer filter 80 and is oriented to be at a lowermost part of the cavity 120. The orientation of the media 112 in this location has advantages. For example, as the coalescer filter 80 coalesces liquids, such as oil, from gas streams coming through the gas flow inlet port 54, due to the location of the media 112 at its lowermost portion in the cavity 120, coalesced liquid is allowed to run off of the media 112 over the housing 114 and to the liquid drain 140. Further, as will be described below, a fluid flow direction arrangement is usable in the preferred filter construction 50 to help direct the collected liquids to the drain construction 140.

The coalescer filter 80 shown in the illustrated embodiment has the housing 114 shaped in a circular manner, with the region of media 112 being disposed as a circular patch and eccentric with respect to the housing 114. That is, the region of media 112 is positioned off-center or non-centered within the housing 114. It should be understood that the coalescer filter 80 can be a variety of shapes and sizes. For example, the housing construction 80 need not be circular, but can be other configurations. The media 112 need not be circular, but can be other shapes, such as rectangular extending across the full extent of the housing 114. Further, the media 112 need not be positioned in its eccentric location. For example, the media 112 can be centered within the housing 114. The particular arrangement shown in the figures is used because it is attractive, eye-catching, and distinctive to Donaldson, the assignee.

Still referring to FIG. 6, the preferred coalescer filter 80 includes ornamentation at 144. Preferably, the ornamentation 144 comprises a plurality of segmented, arcuate, tapering stripes 146. In preferred constructions, the stripes 146 are molded as part of the housing 140 and project somewhat away from the nostriped, planar, portions 147 of the housing 140. The ornamentation 144 provides no function to the filter construction 50. The particular ornamentation 144 is used because it is distinctive to Donaldson, as well as being eye-catching and attractive.

Preferably, the filter construction 50 includes a fluid flow direction arrangement. Preferably, the fluid flow direction arrangement will help to direct collected liquids to drain construction 140 and to the liquid flow outlet port 56, and direct gas flow to the downstream barrier media. While a variety of constructions are contemplated, in the embodiment shown, the filter construction 50 includes a baffle member 150. In the specific embodiment shown, the baffle member 150 is attached to and is integral with the coalescer filter 80. In other embodiments, the baffle member 150 can be a separate construction independent of the coalescer filter 80. The baffle member 150 comprises generally a planar member oriented downstream of the coalescer media 112. The baffle member 150 helps to direct collected liquid coalesced by the media 112 into drain construction 140 and eventually out through the liquid flow outlet port 56.

The baffle member 150 also functions to force gas flow to diverge around the baffle member into a gas flow plenum 152. That is, the baffle member 150 blocks or prevents gas flow from bombarding the first pleat of the pleated media 96. The gas flow plenum 152 permits the gas to flow uniformly through the pleated media 96. The baffle member 150 is positioned at a location to block a direct straight line gas flow from the coalescer filter 80 to the downstream barrier media. By "to block a straight line gas flow", it is meant that the gas flow must turn; the gas flow is not permitted to flow in a straight line; that is, the baffle member 150 forces the gas to flow around it, and thus, deviate from a generally straight line.

As can be seen in FIG. 4, the gas flow plenum 152 tapers between a region 154 adjacent to the first stage media construction 80, and a region 155, adjacent to the rear wall 66. The angle of taper is preferably at least 2°, no greater than 70°, preferably between 5-60°, and typically will be between 10-45°. As can be seen in FIG. 4, the gas flow plenum 152 has a larger volume at the region 154 than at the region 155. This helps to distribute airflow more evenly and uniformly across the length of the panel filter 100. Further, the volume of gas flow plenum 152 helps to reduce restriction through the construction 50. As can be seen in Fig. 4, the gas flow plenum 152 provides a space between the lowermost tip of the pleated media 96 and the back wall 69. Preferably, this space has a linear distance between pleat tip to back wall 69 of at least 12,7 mm (0.5 inch), more preferably 20,3-30,5 (0.8-1.2 inches). This space helps to prevent coalesced oil from contacting the pleated media 96.

As can also be seen in FIG. 4, the rear wall 69 slopes toward the liquid flow outlet 56. The sloped wall 69 preferably forms drain construction 140.

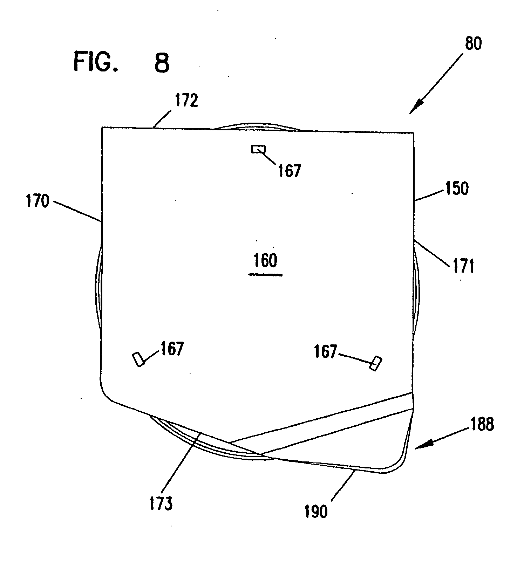

Preferably, the baffle member 150 comprises a plate 160 secured to the coalescer filter 80. In the manner shown in the drawing, the support ring 124 includes a plurality of projecting tabs 162 axially projecting outside of the housing 114 to depend therefrom. In the preferred embodiment, there are at least 2 tabs, preferably 3 or more tabs 162. Each of the tabs 162 includes a shelf 164 and a projecting finger 166 (FIG. 7). In one preferred method of construction, the plate 160 is provided with holes or apertures, which accommodate the fingers 166 of each of the tabs 162. After the fingers 166 are inserted through the holes in the plate 160, the plate 160 is held or supported or rested upon the shelf 164. Heat is then used, such as through hot plate conduction, to melt the fingers 166 and rivet them to the plate 160 at rivet points 167 (FIG. 8). In other embodiments, the plate 160 could be ultrasonically welded to the tabs 162.

Preferably, the construction 50 includes a system to ensure that the coalescer filter 80 is oriented properly within the cavity 120. In other words, it is preferred that the coalescer filter 80 be oriented within the cavity 120 such that the circular region of media 112 is adjacent to the liquid outlet port 58. In the embodiment illustrated, the system for ensuring the proper orientation includes a specific shape to the plate 160 in combination with a shape of the front wall 65 of the body 60. Attention is directed to FIG. 8. In FIG. 8, a bottom plan view of the coalescer filter 80 is shown. The plate 520 is shown as having, for example, a trapezoidal construction. Specifically, there are two parallel sides 170, 171; a side 172 transverse or perpendicular to sides 170, 171; and an angled side 173 intersecting parallel sides 170, 171.

Attention is directed to FIG. 5. In FIG. 5, it can be seen that front wall 65 includes a similarly shaped cavity 120. For example, cavity 120 includes two parallel sides 181, 182; a side 183 perpendicular to sides 181, 182; and an angled side 184 intersecting sides 181, 182 and non-parallel to side 183. The shape of cavity 120 and plate 160 ensures that the coalescer filter 80 may only be oriented or inserted within the cavity 120 in one orientation. It is the orientation that best directs liquid to the liquid flow outlet port 58. In orienting the coalescer 80 in the cavity 120, the sides 172, 173 need to be aligned with the cavity sides 183, 184 to fully install the coaleser filter 80 within the construction.

In certain preferred constructions, the coalescer filter 80 includes a construction for helping to remove the coalescer filter 80 from the cavity 120. Preferably, the coalescer filter 80 will include a handle construction or finger pull 188. As can be seen in FIGS. 4 and 7, the finger pull 188 preferably comprises a flange 190 projecting from the plate 160. Preferably, the flange 190 is integral with the plate 160 and molded during fabrication to project out of the plane of the plate 160. When the coalescer filter 80 is oriented within the cavity 120, the flange 190 extends or projects into the gas flow plenum 152. This helps to provide for convenient removal and replacement of coalescer filter 80 from the body 60.

It should be noted that, preferably, the finger pull 188 also corresponds to a portion of the plate 160 that forms the angled side 173, in order to help ensure proper orientation of the coalescer filter 80 within the cavity 120. The flange 190 also helps to direct collected liquid coalesced in the media 112 toward the drain construction 140 and liquid flow outlet port 58.

### A. Example operation and changeout of the embodiment of S.N. 09/205,468

In operation, the coalescer filter construction 50 works as follows. Blow-by gasses from an engine crank case are taken in through the gas flow inlet port 54. The gas is passed through the coalescer filter 80. Coalescer filter 80 separates liquids, with any entrained solids, from the rest of the gas stream. The liquid flows off of the media 112, over the housing 114 or along the baffle plate 150, to the drain construction 140, and out though the liquid flow outlet port 58. This liquid material is often oil, and may be recycled to the crank case to be reused.

The gas stream that is not coalesced by the coalescer 80 impacts the baffle member 150 and is directed by the baffle member 150 into the gas flow plenum 152. The gas flow moves through the gas flow plenum 152 to the second stage or panel filter 100. The panel filter 100 removes additional particles and solids from the gas stream. The panel filter 100 is pleated, such that particles and any further liquid collects or agglomerates on the pleats and falls or drains by gravity against the sloped back wall 69 and toward the drain construction 140. The gas then enters the clean gas flow plenum 152 and exits through the gas flow outlet port 56. From there, the gases may be directed, for example, to the turbo of an engine intake system.

The coalescer filter construction 50 is serviced as follows: The door 62 is removed from the body 60 by unscrewing the thumbolts 90, 92. The door 62 is then pivoted by way of the hinge tabs and receivers 73, 74. The downstream side of the panel filter 100 is viewable. The panel filter 100 is removed from the body 406 and disposed of.

The coalescer filter 80 may then be removed from the receiver 72. The finger pull 188 is grasped by the user's hand, and the coalescer filter 80 is removed from the cavity 120. This breaks the radial seal 126. The old coalescer filter 80 is disposed of, such as by incineration. A second, new coalescer filter is then oriented within the receiver 72. This is done by matching the outline of the baffle member 150 to the outline of the cavity 120 and aligning the flange 190 with the corresponding outlined flange portion in the cavity 120, for example, aligning angled side 173 of the coalescer 80 with angled side 184 of the cavity 120. This orients the region of media 112 in a preferable location with respect to the gas flow inlet port 54 and the liquid flow outlet port 58. The housing 114 is compressed between and against the support ring 124 and the inner wall 122 of the cavity 120 to form a radial seal 126 therebetween, when the coalescer filter 80 is properly installed. The coalescer filter 80 can be installed and removed by hand. No more than 23 kg (50 pounds of force) is needed; typically, 11-16 kg (25-35 pounds of force) is used.

Next, a second, new panel filter 100 is oriented within the perimeter trough 104 of the body 60. The door 62 is then pivoted on its pivot arrangement between the hinge tabs and receivers 73, 74 into a closed position, FIG. 5. The thumb bolts 90, 92 are turned within the apertures and tightened to form a seal with the gasket member 94 between the door 62 and the body 60. When the thumb bolts 90, 92 are tightened, the compression force on the gasket member 94 between the body 60 and the door 62 can be typically forces up to 45 kg (100 pounds).

When disposing of the coalescer filter 80 and panel filter 100, preferably these constructions consist of non-metallic material at least 95% non-metallic, more preferably at least 98%, and typically 99% or 100% by weight non-metallic material. When these constructions are non-metallic, they may be completely incinerated, leaving little residue. This provides for convenient disposal.

### B. One construction according to S.N. 09/205,468

One specific example for a filter construction 50 is described herein. Of course, a wide variety of arrangements and dimensions are included within the scope of this disclosure.

The filter construction 50 is useful on a:1.5 liter-16 liter engine, 37-895 kw (50-1200 hp), turbo charged, or super charged, diesel, or natural gas. In one application. the engine is a 261-298 kw (350-400 hp) V-8 engine. The engine has a piston displacement of at least 3 liters, typically 7-14 liters. It typically has 13,6-27,2 m³/h (8-16cfm) of blow-by gases generated. Preferred filter constructions 50 can handle blow-by gases from 1,7-34 m³/h (1-20 cfm).

In other systems, the filter construction 50 is useful on engines with the following powers: less than 8 kw (<11 hp); 8-19 kw (11-25 hp); 19-37 kw (25-50 hp); 37-75 kw (50-100 hp); 75-130 kw (100-175 hp); 130-225 kw (175-300 hp); 225-450 kw (300-600 hp); 450-560 kw (600-750 hp); and greater than 560 kw (>750 hp).

It will be understood that a wide variety of specific configurations and applications are feasible, using techniques described herein. The following dimensions are typical examples.

| Structure | At least | No greater than | Typical |
|---|---|---|---|
| housing 52 length | 120 mm | 360 mm | 180-300 mm |
| housing 52 width | 100 mm | 400 mm | 150-260 mm |
| housing 52 depth at ports | 90 mm | 360 mm | 130-230 mm |
| gas inlet 54 diameter | 10 mm | 50 mm | 19-33 mm |
| gas outlet 56 diameter | 10 mm | 50 mm | 19-33 mm |
| liquid outlet 58 diameter | 8 mm | 40 mm | 13-23 mm |
| coalescer housing 114 diameter | 35 mm | 160 mm | 55-100 mm |
| coalescer media 112 diameter | 15 mm | 70 mm | 25-45 min, preferably 30-40 mm |
| housing 114 thickness | 10 mm | 40 mm | 15-25 mm |
| overall thickness of housing 114 plus baffle plate 150 | 13 mm | 54 mm | 20-35 mm |
| distance between housing 114 and baffle plate 150 | 1 mm | 20 mm | 3-7 mm |
| baffle plate 150 length of each short side | 35 mm | 160 mm | 55-100 mm |
| baffle plate 150 length of the long side | 40 mm | 170 mm | 60-110 mm |

### C. Example Materials

In this section, certain example materials useful for the embodiment of Figs. 2-8 are described. A variety of materials may be used, other than those described herein.

The housing 52 can be plastic, such as carbon filled nylon.

The media 112 of the coalescer 80 is generally non-pleated, non-cylindrical, fibers having an average fiber size of about 12.5 µm and a percent solidity, free state, of no greater than about 1.05%. The media 112 has an upstream, exposed surface area of at least 6,45 cm² (1 in.²), no greater than about 45,2 cm² (7 in.²), and typically about 19,4-25,8 cm² (3-4 in.²). a polyester, fibrous media. The material has an average fiber diameter of 1.5 denier (about 12.5 µm), and a solidity in a free state of at least 0.85%. It has a weight of, typically, greater than about 105 g/m² (3.1 ounces per square yard). Typically, it has a weight less than 129 g/m² (3.8 ounces per square yard). Typical weights are within the range of 105-129 g/m² (3.1-3.8 ounces per square yard). Typically, the media has a thickness at 0,14 mbar (0.002 psi) compression (free thickness) of greater than about 8,1 mm (0.32 inches). Typically, the media has a thickness at 0,14 mbar (0.002 psi) compression (free thickness) of less than about 10,7mm (0,42 inches). Typical free thicknesses for the media are in the range of 8.1-10.7 mm (0.32-0.42 inches). The media has a typical permeability of no less than about 113 m/min (370 feet per minute).

The housing 114 of the coalescer 80, and the gasket 94 of the panel filter 100 can be a soft, compressible material, such as foamed polyurethane. One example foamed polyurethane is described above for gasket 94.

The support ring 124 and screens 116, 118, and 102 can be constructed of plastic, such as carbon filled nylon.

The panel filter 100 is preferably constructed of non-metallic materials, to be completely incineratable. For example, the media 96 can be a synthetic glass fiber filter medium, coated and corrugated to enhance performance in ambient air-oil mist conditions. The media 96 has a face velocity of at least 3 cm/min (0.1 ft/min.), no greater than1,52 m/min (5 ft/min.), and typically about 9-18 cm/min (0.3-0.6 ft./min.). The pleat depth is no less than 12,7 mm (0.5 in.), no greater than 76,2 mm (3 in.), and typically about 38,1-50,8 mm (1.5-2 in.). The pleat length is at least 25,4 mm (1 in.), and typically 152,4-177,8 mm (6-7 in.). The pleated filter 468 has a perimeter area of at least 25,8 cm² (4 in.²), and typically about 323-335 cm² (50-52 in.²). The pleated media 96 has an upstream media surface area of at least 413 cm² (64 in.²) and preferably about 1290-1420 cm² (200-220 in.²). The synthetic glass fiber filter media may be coated with a low surface energy material, such as an aliphatic fluorocarbon material, available from 3M of St. Paul, Minnesota. Prior to coating and corrugating, the media has a weight of at least 130,3 g/m² (80 pounds/ 3000 sq. ft); no greater than about 143,3 g/m² (88 pounds/3000 sq. ft); typically in a range from about 136.8 ± 6.5 g/m² (80-88 pounds/3000 square feet). The media has a thickness of 0.69 ± 0.10 mm (0.027 ± 0.004 inches); a pore size of about 41-53 µm; a resin content of about 21-27%; a burst strength, wet off the machine of 124 ± 34 kPa (13-23 psi); a burst strength wet after 5 minutes at 150 °C (300°F) of 255 ± 83 kPa (37 ± 12 psi); a burst strength ratio of about 0.30-0.60; and a permeability of 10.1 ± 1.8 m/min (33 ± 6 feet per minute). After corrugating and coating, the media has the following properties: corrugation depth of about 0.58-0.69 mm (0.023-0.027 inches); a wet tensile strength of about 1,56-1,76 kg/cm (6-10 pounds per inch); and a dry burst strength after corrugating of no less than 207 kPa (30 psi).

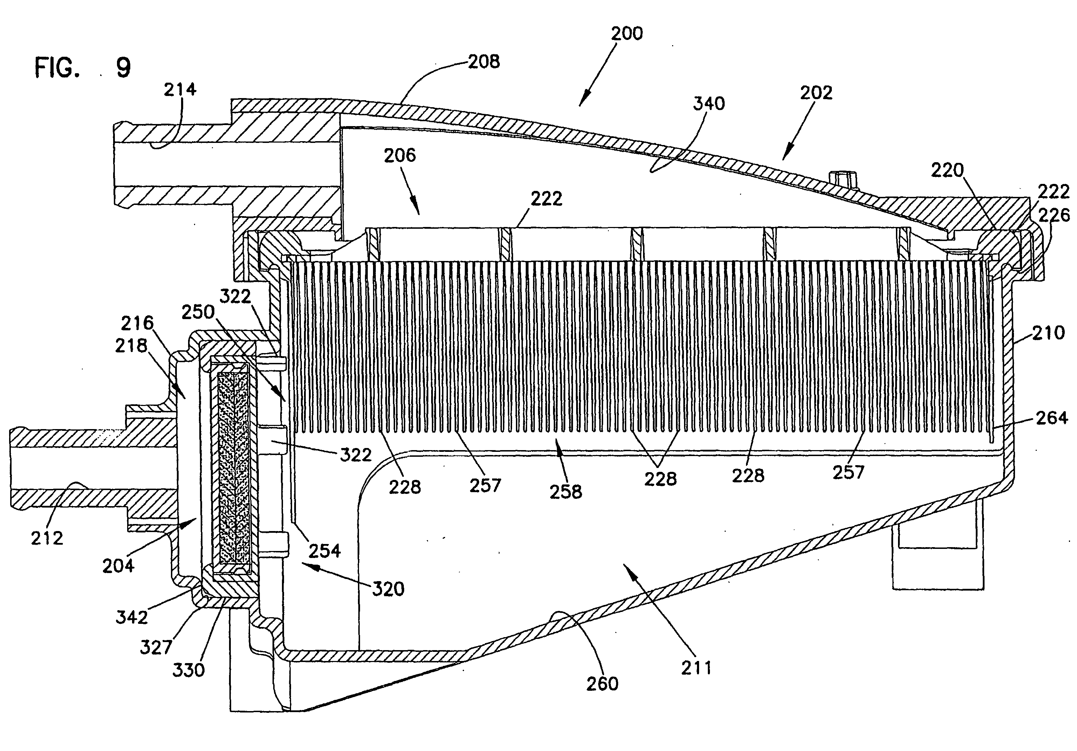

### III. An Additional Embodiment, FIGS. 9-16

Attention is directed to FIG. 9. FIG. 9 illustrates an additional embodiment of a multi-stage oil aerosol separator filter arrangement generally at 200. The filter arrangement 200 generally includes a housing 202 for holding and containing a first stage aerosol coalescer filter element 204 and a second stage panel filter element 206.

The housing 202 is constructed analogously as the housing 52. As such, the housing 202 is a two-piece construction including a cover or door 208 mounted on a body or shell section 210. Similar to the housing construction 52, the housing 202 has a gas flow inlet port 212, a gas flow outlet port 214, and a liquid flow outlet port or drain analogous to drain 58, but not illustrated in FIG. 9. The gas flow inlet port 212 is positioned to extend into a front wall 216; more particularly, the gas flow inlet port 212 is directed into a receiver 218.

The receiver 218 defines a volume that is sized for receiving the first stage aerosol coalescer filter element 204 therein. The gas flow inlet port 212 is directed into the volume of the receiver 218 in order to direct gas flow entering the filter arrangement 200 through the first stage coalescer filter element 204, in a manner described below.

The cover or door 208 is selectively removable from the body 210, in an analogous manner as door 62 and body 60 of FIGS. 2-5. A gas flow seal 220 between the door 208 and body 210 is provided by a seal member or gasket 222. The gasket 222 is preferably constructed of polyurethane, more preferably, foamed polyurethane, as described above for gasket 94.

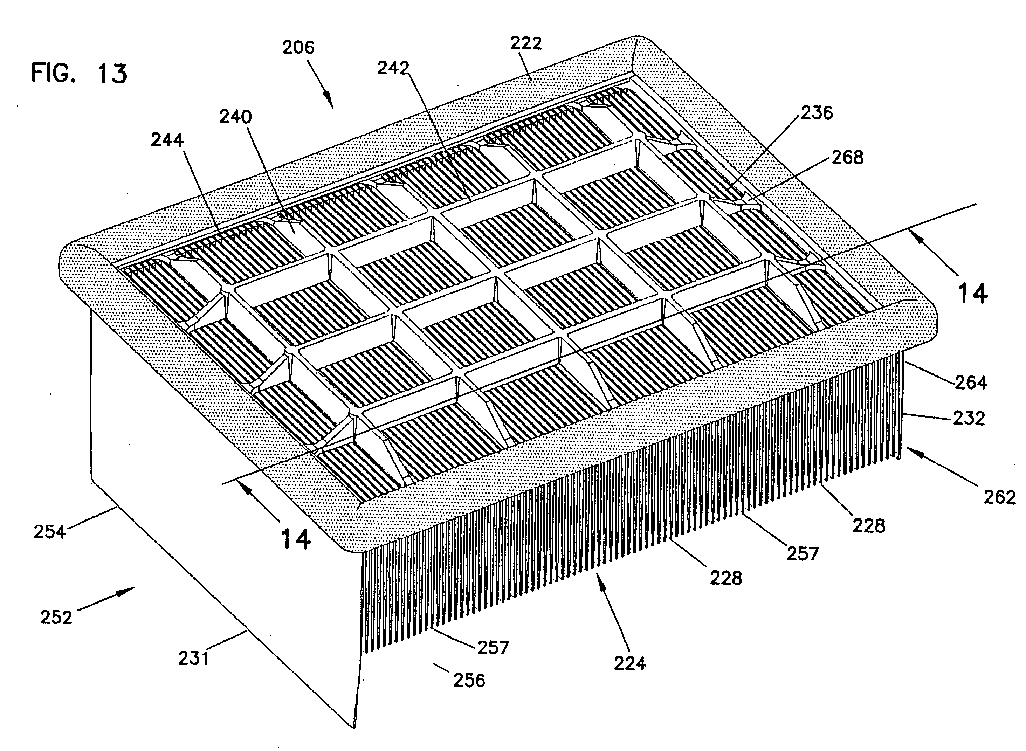

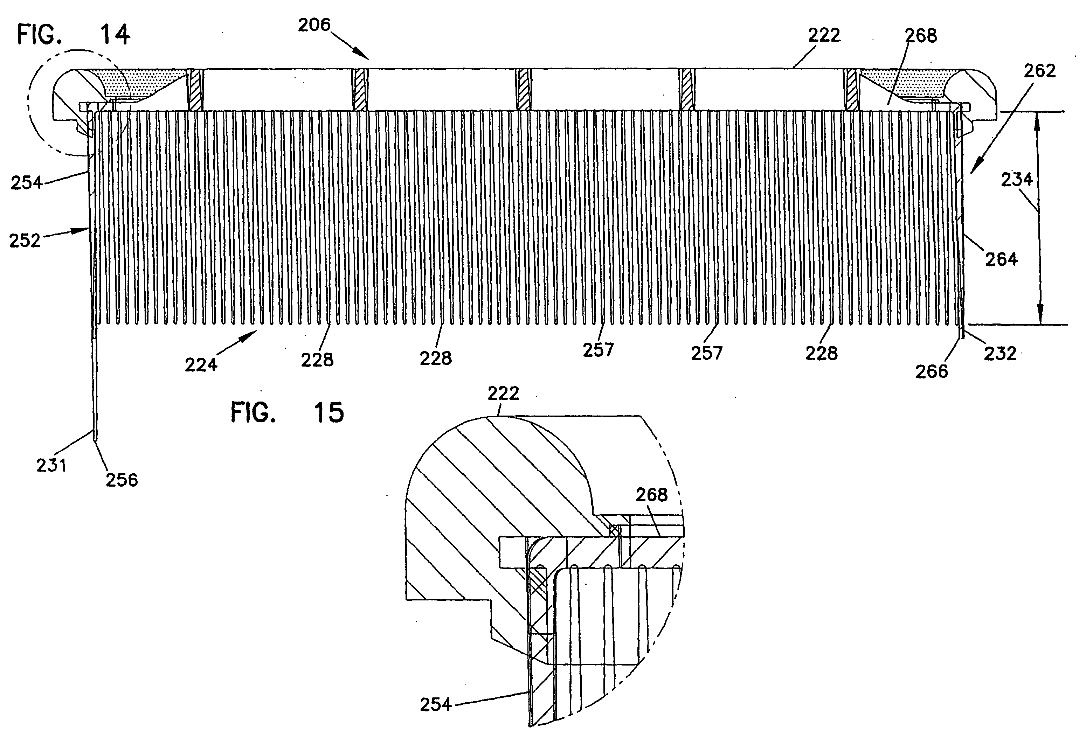

Referring now to FIGS. 13 and 14, the panel filter element 206 comprises pleated media 224, positioned in a generally rectangular configuration. Media 224 is circumscribed by the gasket 222. As can be seen in FIG. 13, the gasket 222 shown is rectangular.

Referring again to FIG. 9, the body 210 preferably includes a perimeter trough 226 that is sized and configured to receive the gasket 222. FIG. 9 shows the panel filter 206 seated within the trough 226 and held by the body 210. Sealing is provided between the door 208 and the body 210 by compressing the gasket 222 into the perimeter trough 226 as the door 208 is closed to form the seal 220 therebetween.

Still in reference to FIGS. 9, 13, and 14, the pleated media 224 comprises a plurality of individual pleats 228 extending between a first end 231 and a second end 232 of the panel filter element 206. Each of the pleats 228 has a pleat depth 234 (FIG. 14) that extends transversely with respect to a downstream face 236 (FIG. 13) of the panel filter element 206. In other words, the individual pleats 228 are oriented normal to the downstream face 236. In the arrangement shown, the panel filter element 206 is sized and configured so that the individual pleats 228 extend longitudinally between the side walls of the body 210. The side walls of the body 210 would be analogous to the side wall 62 (FIG. 2) and sidewall 68 (FIG. 5) of the body 60.

The pleated media 224 may comprise a variety of materials. One usable material includes synthetic glass fiber filter medium, coated and corrugated to enhance performance in ambient air-oil mist conditions. In particular, the pleated media 224 may be coated with a low surface energy material, such as an aliphatic fluorocarbon material, as described above in connection with media 96. Typically, there will be at least 50 pleats extending between the first end 231 and the second end 232 of the panel filter element 206. In particular, there can be between 70-100 pleats, and no greater than about 150 pleats. Each of the pleats 228 can be constructed to have a pleat depth 234 of at least 6,4 mm (0.25 in), no greater than about 152 mm (6 in), and typically about 25,4-76,2 mm (1.0-3 in). The length of each of the pleats 228 is typically at least 25,4 mm (1 in.) no greater than 305 mm (12 in), and typically about 127-229 mm (5-9 in.).

In preferred arrangements, the panel filter element 206 will include a filter media support grid or screen 240. The screen 240 preferably covers the downstream face 236 of the second stage filter element 206, and operates to support the pleated media 224 against internal pressures in the housing 202.

In preferred arrangements, the second stage panel filter element 206 includes a handle construction 242 to assist in the convenient handling of the panel filter element 206. In particular, the handle construction 242 is constructed and arranged for grasping by a human hand to allow for manipulation and orientation of the panel filter element 206 to be installed and removed in the body 210. In preferred arrangements, the handle construction 242 will also operate as the media support screen 240. Specifically, the screen 240 is constructed of a grid size with sufficient openness to permit insertion of human fingers of a hand within the screen 240. Referring to FIG. 13, the screen 240 depicted is a grid of intersecting grid members 244. In the particular one illustrated in FIG. 13, the grid members 244 are in a rectangular configuration, in particular, a square configuration. The grid members 244 are sized, such that they define a size of at least 2,5 by 2,5 mm (0.1 in. by 0.1 in.), no greater than 152,4 by 203,2 mm (6 in. by 8 in.), and typically about 25,4-50,8 by 25,4-50,8 mm 0-2 in. by 1-2 in.). These sizes are usually sufficient to accommodate a typical human hand and allow for grasping and manipulation.

Preferably, the panel filter element 206 includes a baffle arrangement 250 (FIG. 9) to direct fluid flow from the first stage coalescer filter element 204 to the pleated media 224 of the second stage panel filter element 206. The baffle arrangement 250 prevents fluid flow from directly interacting and wearing out the pleated media 224 that would, in the absence of the baffle arrangement 250, be in direct fluid flow alignment with the first stage coalescer filter element 204. In the arrangement shown, the baffle arrangement 250 includes at least a first baffle member 252 located generally at the first end 231 of the second stage panel filter element 206. In particular, the first baffle member 252 comprises a fluid impervious baffle plate 254, extending transversely with respect to the downstream face 236. The baffle plate 254 also extends generally parallel to the pleat depth direction 234 (FIG. 14) of the pleats 228. In preferred embodiments, the baffle plate 254 will extend at least as far as the pleat depth 234. In particular, the baffle plate 254 will have a length that is greater than the pleat depth 234. In other words, a free end 256 of the baffle plate 254 will extend a distance from the downstream face 236 and gasket 222 farther than the tips 257 of the individual pleats 228. The free end 256 extends a distance farther than the tips 257 of at least 6,4 mm (0.25 in.), typically about 12,7-50,8 mm (0.5-2 in.), and no greater than about 127 mm (5 in.). The pleat depth 234 will typically be at least 25% of the length of the baffle plate 254, typically about 50-80% of the length of the baffle plate 254, and typically no greater than 95% of the length of the baffle plate 254.

As can be seen in FIG. 9, after fluid flow exits the first stage aerosol coalescer filter element 204, it will be directed to the upstream face 258 of the second stage filter element 256. The baffle plate 254 will function to help force fluid flow to diverge into a gas flow plenum 260. That is, the baffle plate 254 will help to block or prevent gas flow from bombarding the pleat 228 adjacent to the first end 231 of the pleated media 224. The baffle plate 254 also helps to collect any oil liquid that is still entrained in the gas stream, even after passing through the media of the first stage coalescer filter element 204. The gas flow plenum 260 will permit the gas to flow uniformly through the pleated media 224 from the upstream face 258 to the downstream face 236. Preferably, the gas flow plenum 260 is shaped analogously to the gas flow plenum 152 described above. The baffle plate 254 will block a direct straight line gas flow from the first stage coalescer filter 204 to the second stage filter element 206.

The baffle arrangement 250 also preferably includes a second baffle member 262. The second baffle member 262 is preferably constructed analogously as a first baffle member 252; as such, the second baffle member 262 comprises a baffle plate 264 extending transversely with respect to the downstream face 236 and generally parallel to the direction of the pleat depth 234. It can be appreciated from FIG. 14 that the second baffle plate 264 shown is generally parallel to the baffle plate 254. The baffle plate 264 depicted has an end 266 that extends beyond (or below, as shown in the orientation in FIG. 14) the pleat tips 257, but could be even with or shorter than the pleat tips 257. In the preferred construction depicted, the baffle plate 264 is shorter than the baffle plate 254, in order to conform to the shape of the body 210 and accommodate the gas flow plenum 260. The baffle plate 264 helps to protect the pleated media 224 during handling and installation. The baffle plate 264 will typically be at least 25% of the length of the baffle plate 254, typically about 50-80% of the length of the baffle plate 254, and typically no greater than 95% of the length of the baffle plate 254.

Attention is directed to FIGS. 14 and 15. In preferred arrangements, the screen 240 and baffle arrangement 250 are molded together as one, integral piece 268. In many convenient arrangements, the baffle plates 254, 264 are molded with the screen 240 from non-metallic material (such that it is readily incinteratable), usually a plastic material. In convenient arrangements, the pleated media 224 is then laid upon the piece 268, and the gasket 222 is molded around the piece 268 and media 224.

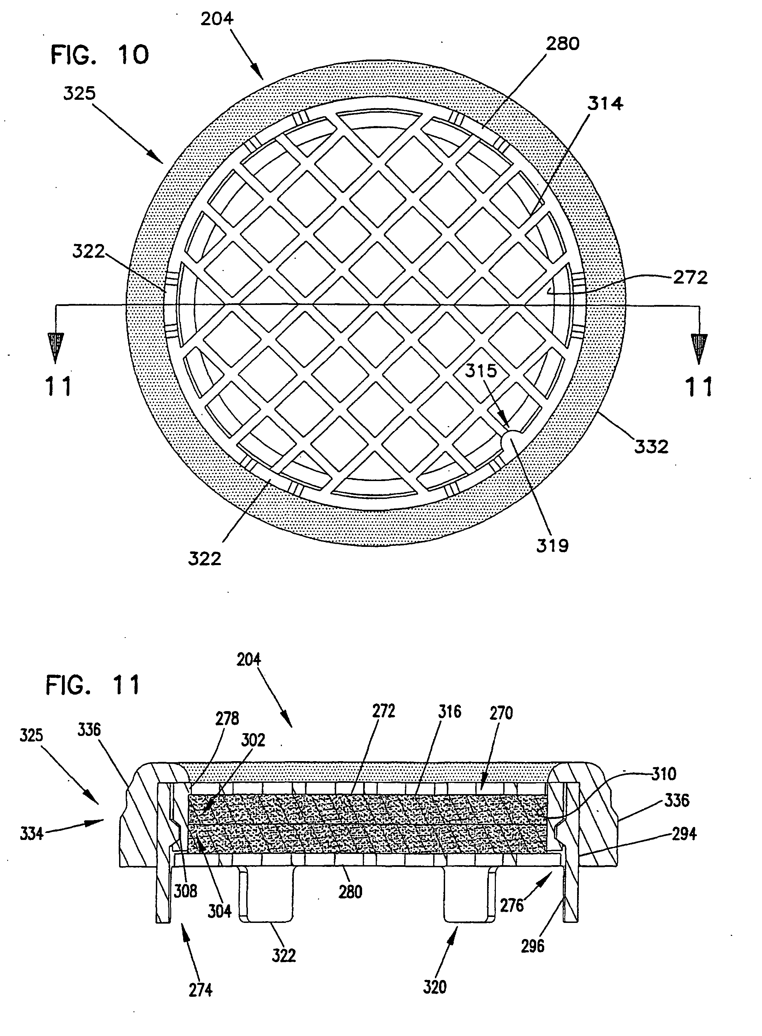

Attention is now directed to the coalescer filter element 204, FIGS. 10-12. The coalescer filter element 204 preferably comprises a region 270 of non-woven, fibrous media 272. The media 272 has an upstream surface area that is different from the upstream surface area of the pleated media 224. By "different", it is meant that there is at least a 20% difference between the upstream surface area of the media 272 and the upstream surface area of the media 224. Preferably, the media 272 upstream surface area is smaller than the pleated media 224 upstream surface area. In most preferred systems, the upstream surface area of the coalescer filter media 272 is no more than 50%, typically no more than 25%, and can be no more than 10% of the upstream surface area of the media of the pleated media 224.

As can be seen in FIG. 10, the media 272 is preferably oriented in a generally circular patch or configuration. The media 272 is held, encapsulated, or trapped by a housing 273 including a frame construction 274 and a seal member 325.

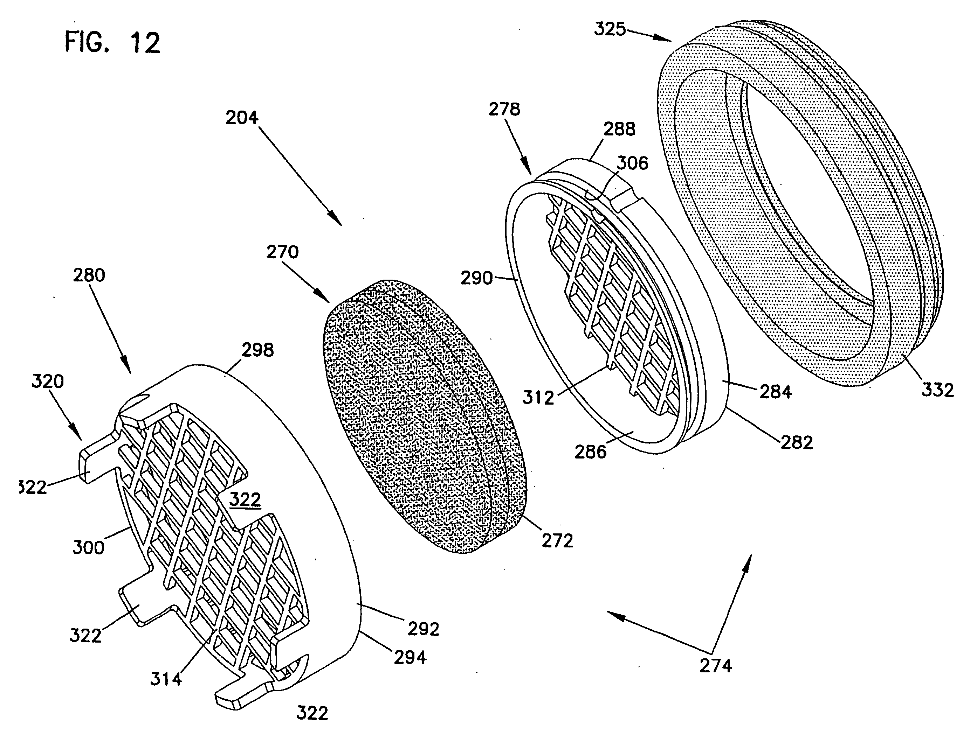

Referring now to FIGS. 11 and 12, the frame construction 274 is preferably a multi-piece arrangement 276 (FIG. 11). In particular, the frame construction 274 includes a first frame piece 278 and a second frame piece 280. The first frame piece 278 includes a periphery 282, which, in this embodiment, is generally circular. The periphery 282 defines an outer annular surface 284, and an opposite, inner annular surface 286. The periphery 282 also has first and second opposite rims 288, 290, at opposite ends of the annular surfaces 284, 286.

The second frame piece 280 similarly includes an outer periphery 292, in this instance, being circular; an outer annular surface 294; an opposite, inner annular surface 296 (FIG. 11); a first rim 298; and an opposite, second rim 300.

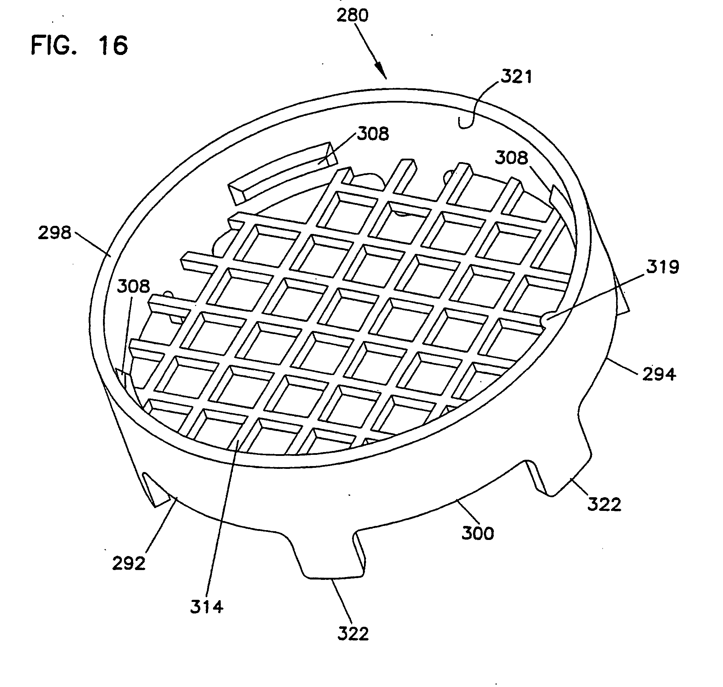

The first and second frame pieces 278, 280 are constructed and arranged to interlock. In particular, the first and second frame pieces 278 include an interlocking arrangement 302 (FIG. 11) that permits the first and second pieces 278, 280 to be conveniently assembled to trap or encapsulate the media 272 therebetween. While a variety of embodiments are contemplated, in the particular arrangement illustrated, the interlocking arrangement 302 includes a snap construction 304. The snap construction 304 includes a mating or interlocking protuberance or detent and a groove. While the parts can readily be reversed, in the embodiment shown in FIGS. 11 and 12, the first frame piece 278 defines a groove member 306 in the outer annular surface 284, while the second frame piece 280 defines a detent or protuberance 308 (FIGS. 11 and 16) along the inner annular surface 296. While the protuberance 308 could be a single, continuous detent, in the particular embodiment illustrated, the protuberance 308 is a plurality of protuberances 308 (e.g. 2-8, about 4 protuberances). In many preferred arrangements, the protuberance 308 will readily snap into the groove member 306. The interlocking of the first and second frame pieces 278, 280 creates a cavity 310 that is preferably used to entrap the media 272 therewithin.

Still in reference to FIGS. 10-12, the coalescer filter element 204 preferably includes a pair of liners or screens 312, 314. One of the screens 312, 314 is positioned on an upstream side 316 of the media 272, while one of the screens 312, 314 is positioned on the downstream side 318 of the media 272. The screens 312, 314 preferably comprise non-metallic materials, such as plastic or carbon-filled nylon, such that the coalescer filter element 204 is readily incineratable. In many preferred arrangements, the screen 312 will extend within the periphery 282 of the first frame piece 78. Indeed, in many preferred arrangements, the screen 312 will be molded as an integral part of the first frame piece 278. As such, the first frame piece 278 and the screen 312 will be constructed of the same material, preferably plastic or carbon-filled nylon.

Similarly, the screen 314 illustrated is contained within the periphery 292 of the second frame piece 280. As with the first frame piece 278, the second frame piece 280 preferably includes the screen 312 molded as an integral, single piece, typically from plastic or carbon-filled nylon.

As can be seen in FIGS. 10 and 12, each of the screens 312,314 define a grid pattern. The screens 312, 314 help to provide support to the media 272, against the pressure differentials within the filter arrangement 200. Each of the screens 312, 314 defines a grid pattern that is shown as a square pattern. The grid size will typically be at least about 2,5 by 2,5 mm (0.1 in. by 0.1 in.), typically about 6,4 by 6,4 mm (0.25 in. by 0.25 in.), and no more tnan about 63,5 by 63,5 mm (2.5 in. by 2.5 in.).

The first and second frame pieces 278, 280 have a keying system to ensure that the frame pieces 278, 280 can be interlocked in only a single orientation. This is to ensure that the screens 312, 314 are in alignment to help prevent added restriction to the flow through the media 272. In the particular embodiment illustrated in FIGS. 10, 12, and 16, the keying system includes a rib and groove arrangement 315 (FIG. 10). While the parts can be readily reversed, in the illustrated embodiment, the first frame piece 278 has a groove 317 (FIG. 12) along its outer annular surface 284, and the second frame piece 280 has a rib 319 along its inner annular surface 321. When mating the first and second frame pieces 278, 280 together, the rib 319 will slide within the groove 317, in slidable communication to permit the snap construction 304 to interlock the frame pieces 278, 280. If the first and second frame pieces 278, 280 are not properly aligned such that the rib 319 is lined up with the groove 317, the rib 319 will interfere with the second rim 290 of the first frame piece 278, preventing the interlocking of the frame pieces 278, 280. When the pieces 278, 280 are properly aligned and the rib 319 slides within the groove 317, the snap construction 304 engages, and it ensures that the screens 312, 314 are lined up with each other such that grids are parallel.

The coalescer filter element 204 preferably includes a handle or projection arrangement 320 extending therefrom. The projection arrangement 320 will operate to assist in insertion and removal of the coalescer filter element 204 in the body 210; the projection arrangement 320 will also help to preclude axial movement of the coalescer filter element 204, when properly installed within the body 210. While a variety of embodiments are contemplated, in the particular embodiment illustrated, the projection arrangement 320 includes a plurality of tabs 322 extending or projecting from the second rim 300 of the second frame piece 280. Preferably, the tabs 322 are spaced along the outer periphery 292 of the second frame piece 280. In most preferred arrangements, the tabs are evenly spaced between adjacent tabs. Preferably, there will be at least three tabs 322, and typically 4-8 tabs 322. In the embodiment shown, there are six tabs 322.

Attention is directed to FIG. 9. In FIG. 9 it can be seen that the tabs 322 will function to preclude the coalescer filter element 204 from inadvertently being moved or vibrated out of the receiver 218. During operation, if there is vibration or other forces that cause the coalescer filter element 204 to move axially within the receiver 218, at least some of the tabs 322 will engage the baffle arrangement 250. In particular, at least one of the tabs 322 will touch the baffle plate 254 (or, the baffle plate 264, depending upon the direction in which the panel filter element 206 is installed within the body 210), and will prevent the coalescer filter element 204 from sliding out of the receiver 218.

The number and spacing of the tabs 322 ensures that, no matter which orientation the coalescer filter element 204 is installed relative to the receiver 218, there will always be a tab 322 that is positioned to either engage or interfere with the baffle arrangement 250.

The projection arrangement 320 also operates to help ensure that the coalescer filter element 204 is initially properly installed in the body 210. In particular, if the user does not place the coalescer filter element 204 far enough within the receiver 218, the tabs 322 will interfere with the proper insertion and orientation of the panel filter element 206. Indeed, in many preferred arrangements, the tabs 322 will interfere with and prevent the orientation of the panel filter element 206 completely. In other words, if the user does not orient the coalescer filter element 204 forward enough in the receiver 218, the tabs 322 will project or extend into the region where the baffle plate 254 normally extends. The tabs 322 will block or prevent the panel filter element 206 from being seated within the perimeter trough 226. The user will then know that the coalescer filter element 204 has not been properly installed. The user can then push the coalescer filter element 204 forward far enough within the receiver 218 to properly install the filter element 204, thereby moving the tabs 322 far enough out of the path of the baffle arrangement 250 of the panel filter element 206. The panel filter element 206 then has a free, clear path for installation and proper seating within the trough 222.

Attention is again directed to FIGS. 11 and 12. Preferably, the coalescer filter element 204 includes a seal member 325 circumscribing the frame construction 274. In preferred arrangements, the seal member 325 will be constructed and arranged to be compressed between and against an inner wall 327 of the receiver 218 and the frame construction 274, to form a radial seal 330 between the coalescer filter element 204 and the body member 210.

The frame construction 274 preferably is constructed of a rigid, support material. As such, the frame construction 274 functions to provide a back stop to the compression of the seal member 325 with the inner wall 327 of the cavity 218. Preferably, the seal member 325 comprises a ring 332 of a molded, compressible material. In many arrangements, it is convenient to assemble the first and second frame pieces 278, 279 around the media 272, and then mold the ring 332 therearound to encapsulate the frame construction 274 therewithin.

Attention is directed to FIG. 11. In FIG. 11, it can be seen that the seal member 325 has a non-linear profile 334 at its outer periphery 336. Preferably, the non-linear profile 334 is shaped analogously as the profile periphery 128 described above in connection with FIG. 7.

The seal member 325 may be constructed of a variety of materials, preferably a compressible material, for example, foamed polyurethane. One usable foamed polyurethane is described above in connection with perimeter gasket 94 and housing 114.

### A. Example Operation and Change Out of the Embodiment of FIGS. 9-16

In operation, the filter arrangement 200 works as follows. Blow-by gases from an engine crank case are taken in through the gas flow inlet port 212. The gas is passed through the first stage coalescer filter element 204. The coalescer filter media 272 separates liquids, with any entrained solids, from the rest of the gas stream. The liquid flows off of the media 272 along the interior 211 of the body 210, and out through a liquid flow outlet port, as shown in FIG. 2 at 58.

The gas stream that is not coalesced by the coalescer filter element 204 flows into the gas flow plenum 260. At least a portion of the gas will impact the baffle arrangement 250 and be directed into the gas flow plenum 260. The gas flow moves through the gas flow plenum 260 to the upstream side 258 of the panel filter element 206. From there, the gas flows through the pleated media 224, where additional particles and solids are removed. The gas then emerges on the downstream face 236 of the panel filter element 206 and into a clean gas flow air plenum 240. The clean gas then exits through the gas flow outlet port 214. From there, the gases may be directed, for example, to the turbo of an engine intake system.

The filter arrangement 200 may be serviced as follows. The door 208 is removed from the body 210, for example, by either unlatching it or unscrewing thumb bolts. The door 208 is then pivoted from the body 210, which reveals the downstream side 236 of the panel filter element 206.

The panel filter element 206 is removed from the body 210 by grasping the handle construction 242. In particular, the user's fingers grasp the grid members 244 of the screen 240. The user exerts a pulling force on the grid members 244, and the panel filter element 206 is removed from the body 210. The panel filter element may then be disposed of, such as by incineration.

The user then has access to the coalescer filter element 204. The user grasps the projection arrangement 320. For example, one of the tabs may be grasped with a tool such as a pliers. The user exerts a pulling force on the tab 322. This breaks the radial seal 320. The coalescer filter element 204 is then removed from the body 210 and disposed of. For example, the coalescer filter element 204 may be incinerated.

A second, new coalescer filter element 204 is then installed within the body 210. The new coalescer filter element 204 is inserted into the receiver 218 and pressed within until generally engaging with a shoulder 342 in the receiver 218. This compresses the seal member 325 between and against the frame construction 274 and the inner wall 327 to form the radial seal 330 therebetween. This also orients the projection arrangement 320 far enough toward the cavity 218 to provide a clear and free path for insertion of the panel filter element 206.

After the coalescer filter element 204 is installed, a second, new panel filter element 206 is installed within the body 210. The second, new panel filter element 206 is oriented, such that the baffle plate 254 is immediately adjacent to the first coalescer filter element 204. The panel filter element 206 is pressed into the body, such that the gasket 222 is oriented within the trough 226. If the coalescer filter element 204 has been properly installed, the panel filter element 206 will readily fit within its seat in the body 210. The door 208 is then closed, and secured to the body 210, in a way to create axial seal 220 between the panel filter element 206 and the door 208.

If the coalescer filter element 204 has not been properly installed, the tabs 322 will interfere with the insertion path of the baffle arrangement 250. There will be interference between the panel filter element 206, such as the baffle plate 254, and the tabs 322. This informs the operator that the operator needs to check the installation of the coalescer filter element 204. Typically, if there is interference between the tabs 322 and the panel filter element 206, the coalescer filter element 204 simply needs to be pressed further inwardly in the receiver 218 toward the shoulder 342. Once the coalescer filter element 204 is properly installed, the panel filter element 206 may then be properly installed.

In operation, the coalescer filter element 204 will operate typically for 250-500 hours, or about 50.000-65.000 km (30,000-40,000 miles) before requiring replacement. The total restriction across both the first stage coalescer filter element 204 and the second stage panel filter element 206 together will be at least about 1,3 cm (1/2 in.) of water, and can be up to about 46 cm (18 in.) of water. After a restriction of about 46 cm (18 in.) of water, the filter arrangement 200 should be serviced.

### B. One Example Construction

Below are certain, usable dimensions for the filter arrangement 200. Of course, a wide variety of arrangements and dimensions are included within the scope of this disclosure.

The first stage coalescer filter element 204 will typically be circular with a diameter of at least 2,54 cm (1 in.), typically 5,1-7,6 cm (2-3 in.), and no greater than about 15,2 cm (6 in.). The media 272 of the coalescer filter element 204 has an upstream surface area of at least about 6,5 cm² (1 square inch) typically about 13-52 cm² (2-8 square inches) and no greater than about 77 cm² (12 square inches). The downstream surface area of the media 272 will be similar.

The upstream surface area of the panel filter element 216 will be at least about 0,465 m³ (5 square feet), typically about 0,93-1,4 m² (10-15 square feet), and no greater than about 2,8 m² (30 square feet),

Each of the baffle plates 254, 264 has a length of at least 7,6 cm (3 in.), no greater than about 30,5 cm (12 in.), and typically about 10,2-20,3 cm (4-8 in.). The baffle plate 254 has a height of at least about 2,5 cm (1 in.), no greater than about 25 cm (10 in.), and typicaly about 7,6-12,7 cm (3-5 in.).The baffle plate 264 has a height of at least about 1,3 cm (0.5 in.), no greater than about 12,7 cm (5 in.) and typically about 2,5-7,6 cm (1-3 in.). The perimeter area of each of the baffle plates 252, 264 is at least about 9,7 cm² (1,5 square inches), no greater than about 775 cm² (120 square inches), and typically about 32,3-387 cm² (6-60 square inches). The baffle plate 254 will typically have a perimeter area that is at least 10%, no greater than about 80%, and typically about 30-50% greater than the perimeter area of the baffle plate 264.

## Claims

1. A filter arrangement comprising:
(a) a housing construction (52, 202) defining an interior (71, 211) and having a gas flow inlet (54, 212), a gas flow outlet (56, 214), and a liquid flow outlet (58);
(b) a first stage coalescer filter (80, 204) comprising a media; said first stage coalescer filter (80, 204) being operably positioned in said interior (71, 211); said media (112, 270) having a first upstream surface area;
(c) a second stage filter element (100, 206) operably positioned in said interior (71, 211);
said filter arrangement being **characterized by**
(i) said second stage filter element (100, 206) comprising a panel filter construction;
(ii) said panel filter construction having pleated media (106, 224) with a second upstream surface area;
(iii) said media comprising a nonwoven media of fibers (112, 270) and said first upstream surface area being different from said second upstream surface area;
(d) a baffle member (150, 250) positioned at a location in said interior to block a direct straight line gas flow from said first stage coalescer filter (80, 204) to said second stage filter element (100, 206); and
(e) a gas flow direction arrangement (52, 202) configured to direct gas flow from the gas flow inlet (54, 212), through the first stage coalescer filter (80, 204), then through the second stage filter element (100, 206), and out through the gas flow outlet (56, 214).

2. A filter arrangement according to claim 1 wherein:
(a) said pleated media (106, 224) includes a plurality of pleats (106, 228); each of said pleats (106 , 228) having a length oriented substantially normal to a downstream face of said first stage coalescer filter (80, 204).

3. A filter arrangement according to any one of claims 1 and 2 wherein:
(a) said baffle member (150, 250) comprises a baffle plate (160, 254);
(i) said baffle plate (160, 254) directing coalesced liquid toward said liquid flow outlet (58); and
(ii) said baffle plate (160, 254) being between a downstream face of said first stage coalescer filter (80, 204) and said second stage filter element (100, 206) to block a direct straight line gas flow from the downstream face of said first stage coalescer filter (80, 204) and said pleated media (106, 224).

4. A filter arrangement according to any one of claims 1-3 further including:
(a) a handle member (188, 320) secured to said first stage coalescer filter (80, 204) for aiding in selective removal of said first stage coalescer filter (80, 204) from said housing (52, 202).

5. A filter arrangement according to claim.4 wherein: ..
(a) said handle member (188) comprises a projecting flange portion (190) of said baffle member (150).

6. A filter arrangement according to any one of claims 1-5 wherein:
(a) said housing construction (52, 202) includes a coalescer receiver (120, 218) adjacent to and in gas flow communication with said gas flow inlet (54, 212); said receiver (120, 218) having an interior wall (122, 327); and
(b) said first stage coalescer filter (80, 204) includes a housing (114, 273) having a sealing portion (128, 325); said sealing portion (128, 325) comprising a compressible, polymeric material being sufficiently compressible to form a radial seal (126, 330) with said interior wall (122, 327) of said receiver (120, 218), when said coalescer filter (80, 204) is oriented therein.

7. A filter arrangement according to claim 6 wherein:
(a) said baffle member (150, 250) comprises a baffle plate (160) secured to said first stage coalescer filter housing (114, 273); and
(b) said baffle plate (160) and said coalescer receiver (120, 218) being shaped such that said coalescer filter (80) is received by said receiver(120, 218) in no more than single orientation.

8. A filter arrangement according to any one of claims 1-7 wherein:
(a) said second stage filter element (100, 206) includes:
(i) a pleated panel filter having a plurality of pleats (106, 228), an upstream side, and a downstream side;
(ii) a porous screen (102, 240) covering said downstream side;
(iii) a circumferential sealing gasket (94, 222) around a periphery;
(iv) each of said pleats (106, 228) having a pleat depth of 12,7-76,2 mm (0.5-3 inches); and
(b) said pleated panel filter being sized and configured to fit within said housing construction (52, 202).

9. A filter arrangement according to any one of claims 1-4 wherein:
(a) said second stage filter element (206) includes said baffle member (250) secured thereto to block a direct straight line gas flow from impacting at least a portion of said pleated media (106, 224).

10. A filter arrangement according to any one of claims 4 and 5 wherein:
(a) said handle member (320) on said first stage coalescer filter (204) includes a projection arrangement (320) extending from said first stage coalescer filter (204);
(i) said baffle member (150, 250) being oriented to engage said projection arrangement (320) and preclude axial movement of said first stage coalescer filter (204) within said housing interior (71, 211).

11. A filter arrangement according to claim 9 wherein:
(a) said second stage filter element (206) further includes a second baffle member (262) secured thereto.

12. A filter arrangement according to any one of claims 1-4, 9, and 10 wherein:
(a) said second stage filter element (206) comprises a panel filter construction having said pleated filter media (224) and an outer perimeter, said pleated filter media (224) comprising:
(i) a glass fiber filter media;
(ii) at least 40 pleats extending between a first end and a second end of said panel filter construction;
(b) an outer gasket member (222) along said outer perimeter comprising a polymeric material;
(c) a media screen (240) positioned in covering relation to said pleated filter media (224);
(i) said baffle member (250) being at said first end.

13. A filter arrangement according to claim 12 wherein:
(a) said baffle member (250) is longer than a depth of said pleats.

14. A filter arrangement according to claim 10 wherein:
(a) said first stage coalescer filter (204) includes:
(i) a frame construction (274) securing said nonwoven media of fibers (270);
(A) said projection arrangement (320) being an integral part of said frame construction (274); and
(ii) an outer periphery having a seal member (325) positioned therealong;
(A) the seal member (325) for creating a seal (330) with said housing construction (52, 202), when the first stage coalescer filter (204) is operably positioned in the housing construction (52, 202).

15. A filter arrangement according to any one of claims 10 and 14 wherein:
(a) said projection arrangement (320) includes a plurality of tabs (322) extending from said first stage coalescer filter (204).

16. A filter arrangement according to claim 14 wherein:
(a) said frame construction (274) includes first and second frame pieces (278, 280) constructed and arranged to interlock;
(i) said first frame piece (278) having a first integral screen (312);
(ii) said second frame piece (280) having a second integral screen (314);
(iii) said nonwoven media of fibers (270) being trapped between said first and second screens (312, 314).

17. A filter arrangement according to claim 16 wherein:
(a) said first and second frame pieces (278, 280) each have generally - circular outer peripheries;-and
(b) said seal member (325) is molded around said frame construction (274).

18. A coalescer filter (80) comprising:
(a) a region of media (112) having a first side and an opposite second side;
(i) said region of media (112) comprising a region of nonwoven fibrous media;
(ii) said first side of said region of media having a first exposed surface area; and
(b) a molded, polymeric, compressible housing (114) having first and second, opposite, sides and an outer periphery;
(i) said housing first side having a first surface with a gas flow opening therein;
(ii) said region of media (112) being positioned within said housing with said first side of said media exposed by said gas flow opening in said housing first side;
(iii) said housing second side having a second surface with a gas flow opening therein;
(iv) said region of media (112) being positioned within said housing with said media second side exposed by said gas flow opening in said housing second side;
(v) said housing (114) being compressible to form a seal member (114) positioned along said outer periphery; and
(c) a support ring (124) molded within said housing (114).

19. A coalescer filter according to claim 18 further including:
(a) a baffle plate (160) oriented adjacent to said housing second side.

20. A coalescer filter according to claim 19 wherein:
(a) said housing (114) is circular;
(b) said support ring (124) comprises a rigid ring molded within said housing (114); and
(c) said baffle plate (160) is secured to said ring.

21. A coalescer filter according to any one of claims 18-20 wherein:
(a) said seal member (114, 325) includes a step construction (130, 336).

22. A coalescer filter according to any one of claims 18-21 wherein:
(a) said seal member (114, 325) comprises foamed polyurethane.

23. A coalescer filter according to any one of claims 18-22 wherein:
(a) said region of media (112, 272) comprises a fibrous media having a free state solidity no more than 1.8% and an average fiber diameter of no more than 25 µm.

24. A panel filter element (100, 206) comprising:
(a) a filter construction having pleated filter media (224) and an outer perimeter;
(i) said pleated media (224) having an upstream side and an opposite downstream side;
(b) an outer gasket member (222) along said outer perimeter comprising a polymeric material;
(c) a media screen (240) positioned in covering relation to said pleated filter media;
(i) said media screen (240) having a grid size of at least 2,54 by 2,54 mm (0.1 in. by 0.1 in).;
(ii) said media screen (240) being oriented adjacent to said downstream side of said pleated media (224);
(d) said pleated media (224) comprising a plurality of pleats (228); each of said pleats having a depth (234) extending in a direction generally transverse to said media screen (240); and
(e) at least a first gas impermeable baffle plate (254);
(i) said baffle plate (254) extending in a same direction as said pleat depth from said downstream side of said pleated media (224) to said upstream side of said pleated media (224).

25. A panel filter element according to claim 24 further comprising:
(a) a second gas impermeable baffle plate (264) extending in a same direction as said first baffle plate (254);
(i) said first baffle plate (254) and said second baffle plate (264) being located at opposite ends of said filter construction.

26. A panel filter element according to claim 25 wherein:
(a) said first baffle plate (254) extends a length greater than said pleat depth and a greater length than said second baffle plate (264).

27. A panel filter element according to any one of claims 25 and 26 wherein:
(a) said pleated filter media (224) comprises:
(i) a glass fiber filter media; and
(ii) at least 50 pleats extending between said first and second baffle plates (254, 264).

28. A panel filter element according to any one of claims 24-27 wherein:
(a) said outer gasket member (222) comprises foamed polyurethane;
(b) said media screen (240) comprises a non-metallic material.

## Patentansprüche

1. Filteranordnung bestehend aus:
(a) einer Gehäusekonstruktion (52, 202), die einen Innenraum (71, 211) bildet und einen Gasstrom-Eintritt (54, 212), einen Gasstrom-Austritt (56, 214) und einen Flüssigkeitsstrom-Austritt (58) besitzt;
(b) einer ersten Filterstufe mit einem Koagulat-Filter (80, 204) mit einem Filtermedium (112, 270), wobei der Koagulat-Filter (80, 204) operativ in dem Innenraum (71, 211) angeordnet ist, und das Filtermedium (112, 270) eine erste stromaufwärtige Oberfläche besitzt,
(c) einer zweiten Filterstufe mit einem Filterelement (100, 206), das operativ in dem Innenraum (71, 211) angeordnet ist;
**dadurch gekennzeichnet, dass**
(1) die zweite Filterstufe mit dem Filterelement (100, 206) eine Plattenfilter-Konstruktion enthält;
(2) die Plattenfilter-Konstruktion aus einem gefalteten Medium (106, 224) mit einer zweiten stromaufwärtigen Oberfläche besteht; und
(3) das Medium (96, 224) aus einem nicht-gewebten Fasermedium (112, 270) besteht, und die erste stromaufwärtige Oberfläche sich von der zweiten stromaufwärtigen Oberfläche unterscheidet;
und weiter **gekennzeichnet durch**
(d) ein Ablenkteil (150, 250), das in dem Innenraum (71, 211) derart in einer Position angeordnet ist, dass es eine direkte geradlinige Gasströmung von der ersten Filterstufe mit dem Koagulat-Filter (80, 204) zu der zweiten Filterstufe mit dem Filterelement (100, 206) verhindert; und
(e) eine Gasstrom-Führungseinrichtung (52, 202), die so konfiguriert ist, dass sie den Gasstrom von der Gasstrom-Eintrittsöffnung (54, 212) **durch** die erste Filterstufe mit dem Koagulat-Filter (80, 204), danach **durch** die zweite Filterstufe mit dem Filterelement (100, 206) und dann **durch** den Gasstrom-Austritt (56, 214) aus dem Innenraum (71, 211) führt,

2. Filteranordnung nach Anspruch 1 **dadurch gekennzeichnet, dass**
(a) das Faltenmedium (106, 224) mehrere Falten (106, 228) besitzt und jede der Falten (106, 228) in ihrer Längsrichtung weitgehend normal zu einer stromabwärtigen Oberfläche der ersten Filterstufe mit dem Koagulat-Filter (80, 204) orientiert ist.

3. Filteranordnung nach einem der Ansprüche 1 oder 2 **dadurch gekennzeichnet, dass**
(a) das Ablenkteil (150, 250) eine Prallplatte (160, 254) besitzt;
(1) die Prallplatte (160, 254) koagulierte Flüssigkeit zu dem Flüssigkeitsstrom-Austritt (58) führt und
(2) die Prallplatte (160, 254) zwischen einer stromabwärtigen Oberfläche der ersten Filterstufe mit dem Koagulat-Filter (80, 204) und der zweiten Filterstufe mit dem Filterelement (100, 206) angeordnet ist, um einen direkten geradlinigen Gasstrom von der stromabwärtigen Oberfläche der ersten Filterstufe mit dem Koagulat-Filter (80, 204) zu dem Falten-Medium (96, 224) zu verhindern.

4. Filteranordnung nach einem der Ansprüche 1 - 3 **dadurch gekennzeichnet, dass**
(a) ein Handhabungselement (188, 320) mit der ersten Filterstufe mit dem Koagulatfilter (80, 204) verbunden ist, um die selektive Herausnahme der ersten Filterstufe mit dem Koagulat-Filter (80, 204) aus dem Gehäuse (250, 202) zu unterstützen.

5. Filteranordnung nach Anspruch 4 **dadurch gekennzeichnet, dass**
(a) das Handhabungselement (188) aus einem von dem Ablenkteil (150) wegragenden Stegteil (190) besteht.

6. Filteranordnung nach einem der Ansprüche 1 - 5 **dadurch gekennzeichnet, dass**
(a) die Gehäusekonstruktion (52, 202) eine Koagulat-Aufnahme (120, 218) besitzt, die benachbart zu und in Gasstrom-Verbindung mit dem Gasstrom-Eintritt (54, 212) angeordnet ist und eine Innenwand (122, 327) besitzt; und
(b) die erste Filterstufe mit dem Koagulat-Filter (80, 203) ein Gehäuse (114, 273) mit einem Dichtungsteil (128, 325) besitzt; der Dichtungsteil (128, 325) ein kompressibles, polymeres Material enthält, das ausreichend kompressibel ist, um eine Radialdichtung (126, 330) mit der Innenwand (122, 327) der Aufnahme (120, 280) zu bilden, wenn der Koagulat-Filter (80, 204) in die Aufnahme (120, 218) eingesetzt ist.

7. Filteranordnung nach Anspruch 6 **dadurch gekennzeichnet, dass**
(a) das Ablenkteil (150, 250) eine an dem Koagulatfilter-Gehäuse, (114, 273) der ersten Filterstufe befestigte Prallplatte (160) besitzt; und
(b) die Prallplatte (160) und die Koagulat-Aufnahmekammer (120, 218) so geformt sind, dass der Koagulat-Filter (80) nur in einer einzigen Orientierung in die Aufnahmekammer (120, 218) einsetzbar ist.

8. Filteranordnung nach einem der Ansprüche 1-7 **dadurch gekennzeichnet, dass**
(a) das Filterelement (100, 206) der zweiten Filterstufe:
(1) einen Plattenfilter mit mehreren Falten (106, 228), einer stromaufwärtigen Seite und einer stromabwärtigen Seite;
(2) ein poröses Sieb (102, 240), das die stromabwärtige Seite abdeckt;
(3) eine Umfangs-Dichtungspackung (94, 222) um eine Peripherie;
(4) Falten (106, 228), die jede eine Faltentiefe von 12,7 - 76,2 mm (0,5 - 3 inch) haben besitzt; und
(b) der Plattenfilter so bemessen und konfiguriert ist, dass er in die Gehäusekonstruktion (250, 202) passt.

9. Filteranordnung nach einem der Ansprüche 1 - 4 **dadurch gekennzeichnet, dass**
(a) die zweite Filterstufe mit dem Filterelement (206) das an ihr befestigte Ablenkteil (250) enthält, um zu verhindern, dass ein direkter geradliniger Gasstrom zumindest nicht auf einen Teil des Falten-Mediums (206, 224) aufprallt.

10. Filteranordnung nach einem der Ansprüche 4 oder 5 **dadurch gekennzeichnet, dass**
(a) das Handhabungselement (320) der ersten Filterstufe mit dem Koagulat-Filter (204) einen Vorsprung (320) besitzt, der von der ersten Filterstufe mit dem Koagulat-Filter (204) wegragt, und
(1) das Ablenkteil (150, 250) so orientiert wird, dass es mit dem Vorsprung (320) in Eingriff kommt und axiale Bewegungen der ersten Filterstufe mit dem Koagulat-Filter (204) innerhalb des Innenraumes (71, 211) verhindert.

11. Filteranordnung nach Anspruch 9 **dadurch gekennzeichnet, dass**
(a) die zweite Filterstufe mit dem Filterelement (206) ferner ein an ihr befestigtes zweites Ablenkteil (262) besitzt.

12. Filteranordnung nach einem der Ansprüche 1 - 4, 9 und 10 **dadurch gekennzeichnet, dass**
(a) die zweite Filterstufe mit dem Filterelement (206) einen Plattenfilter mit dem Falten-Medium (224) und einem äusseren Umfang besitzt, wobei das Falten-Medium (224) aus:
(1) einem Glasfaser-Filtermedium; und
(2) mindestens 40 Falten, die sich zwischen einem ersten Ende und einem zweiten Ende des Ablenkteils erstrecken,
besteht.
(b) ein um den äusseren Umfang geführtes äusseres Dichtungselement (22) aus einem polymeren Material enthält,
(c) ein Mediumsieb (240) das Faltenmedium (224) überdeckend angeordnet ist; wobei
(1) das Ablenkteil (250) an dem ersten Ende angeordnet ist.

13. Filteranordnung nach Anspruch 12 **dadurch gekennzeichnet, dass**
(a) das Ablenkteil (250) länger ist als die Tiefe der Falten.

14. Filteranordnung nach Anspruch 10 **dadurch gekennzeichnet, dass**
(a) die erste Filterstufe mit dem Kaogulat-Filter (204):
(1) eine Rahmenkonstruktion (274) enthält, die das nicht-gewebte Fasermedium (270) sichert, wobei
(A) der Vorsprung (320) ein integraler Bestandteil der Rahmenkonstruktion (274) ist, und
(2) ein entlang eines äusseren Umfangs angeordnetes Dichtungselement (325) enthält, wobei
(A) das Dichtungselement (325) mit dem Gehäuse (52, 202) eine Dichtung (330) bildet, wenn die erste Filterstufe mit dem Koagulatfilter (204) operativ in dem Gehäuse (52, 202) positioniert ist.

15. Filteranordnung nach einem der Ansprüche 10 oder 14 **dadurch gekennzeichnet, dass**
(a) der Vorsprung (320) mehrere Nocken (322) besitzt, die von der ersten Filterstufe mit dem Koagulat-Filter (204) wegragen.

16. Filteranordnung nach Anspruch 14 **dadurch gekennzeichnet, dass**
(a) die Rahmenkonstruktion (274) erste und zweite Rahmenelemente (278, 280) besitzt, die zur Verriegelung konstruiert und angeordnet sind;
(1) das erste Rahmenstück (278) ein erstes integrales Sieb (312) besitzt,
(2) das zweite Rahmenstück (280) ein zweites integrales Sieb (314) besitzt, und
(3) das nicht-gewebte Fasermedium (270) zwischen dem ersten Sieb (312) und dem zweiten Sieb (314) angeordnet ist.

17. Filteranordnung nach Anspruch 16 **dadurch gekennzeichnet, dass**
(a) sowohl das erste Rahmenstück (278) als auch das zweite Rahmenstück (280) weitgehend kreisförmige äussere Peripherien besitzen,
(b) das Dichtungselement (325) um die Rahmenkonstruktion (274) geformt ist.

18. Koagulat-Filter (80) **gekennzeichnet durch**:
(a) einen Mediumbereich (112) mit einer ersten Seite und einer gegenüber liegenden zweiten Seite, wobei
(1) der Mediumbereich (112) einen Bereich nicht-gewebten Fasermediums enthält; und
(2) die erste Seite des Mediumbereiches eine erste freiliegende Oberfläche besitzt; und
(b) ein geformtes polymeres kompressibles Gehäuse (114) mit einer ersten Seite und einer gegenüberliegenden zweiten Seite und einer äusseren Peripherie, wobei
(1) die erste Gehäuseseite eine erste Oberfläche mit einer Gasstromöffnung besitzt,
(2) der Mediumbereich (112) derart in dem Gehäuse angeordnet ist, dass die erste Seite des Mediumbereichs **durch** die Gasstromöffnung in der ersten Gehäuseseite frei liegt,
(3) die zweite Gehäuseseite eine zweite Oberfläche mit einer Gasströmungsöffnung besitzt,
(4) der Mediumbereich (112) derart in dem Gehäuse angeordnet ist, dass die zweite Mediumseite **durch** die Gasstromöffnung in der zweiten Gehäuseseite offen liegt,
(5) das Gehäuse (114) kompressibel ist, um ein Dichtungselement (114) entlang der äusseren Peripherie zu bilden; und
(c) einen Stützring (124) der in dem Gehäuse (114) geformt ist.

19. Koagulat-Filter nach Anspruch 18 **gekennzeichnet durch**
(a) eine Prallplatte (160), die benachbart zur zweiten Gehäuseseite angeordnet ist.

20. Koagulat-Filter nach Anspruch 19 **dadurch gekennzeichnet, dass**
(a) das Gehäuse (114) kreisförmig ist;
(b) der Stützring (124) aus einem in das Gehäuse (114) geformten steifen Ring besteht; und
(c) die Prallplatte (160) an dem Ring befestigt ist.

21. Koagulat-Filter nach einem der Ansprüche 18 - 20 **dadurch gekennzeichnet, dass**
(a) das Dichtungselement (114, 325) eine Stufenkonstruktion (130, 336) besitzt.

22. Koagulat-Filter nach einem der Ansprüche 18 - 21 **dadurch gekennzeichnet, dass**
(a) das Dichtungselement (114, 325) Polyurethan Schaumstoff enthält.

23. Koagulat-Filter nach einem der Ansprüche 18 - 22 **dadurch gekennzeichnet, dass**
(a) der Mediumbereich (112, 272) ein Fasermedium mit einer Dichte im ungebundenen Zustand (free state solidity) von nicht mehr als 1,8 % und einem durchschnittlichen Faserdurchmesser von nicht mehr als 25 µm enthält.

24. Plattenfilter-Element (100, 206) **gekennzeichnet durch**:
(a) eine Filterkonstruktion mit einem gefalteten Filter-Medium (224) und einem äusseren Umfang, wobei
(1) das gefaltete Filter-Medium (224) eine stromaufwärtige Seite und eine gegenüberliegende stromabwärtige Seite besitzt;
(b) **durch** ein äusseres Dichtungselement (222) aus einem polymeren Material entlang des äusseren Umfangs;
(c) ein Mediumsieb (240), das deckend über dem gefalteten Filter-Medium angeordnet ist,
(1) eine Maschengrösse von mindestens 2,54 mal 2,54 mm (0,1 inch mal 0,1 inch) hat,
(2) und benachbart zur stromabwärtigen Seite des Filtermediums (224 angeordnet ist; sowie
(d) **durch** eine Ausführung, bei der das gefaltete Filter-Medium (224) mehrere Falten (228) besitzt, und jede der Falten in einer Richtung weitgehend quer zu dem Mediumsieb (240) eine Tiefe (234) hat; und
(d) **durch** eine erste gasundurchlässige Prallplatte (254),
(1) die sich in der gleichen Richtung von der stromabwärtigen Seite des Faltenmediums (224) zu der stromaufwärtigen Seite des Faltenmediums (224) erstreckt, wie die Faltentiefe.

25. Plattenfilterelement nach Anspruch 24 **gekennzeichnet durch**
(a) eine zweite gasundurchlässige Prallplatte (264), die sich in der gleichen Richtung wie die erste Prallplatte (254) erstreckt, und
(1) die erste Prallplatte (254) und die zweite Prallplatte (264) an einander gegenüberliegenden Enden der Filterkonstruktion angeordnet sind.

26. Plattenfilterelement nach Anspruch 25, **dadurch gekennzeichnet, dass**
(a) die erste Prallplatte (254) eine Längenerstreckung hat, die grösser als die Faltentiefe ist und eine grössere Länge als die zweite Prallplatte (264) hat.

27. Plattenfilterelement nach einem der Ansprüche 25 oder 26, **dadurch gekennzeichnet, dass**
(a) das gefaltete Filtermedium (224):
(1) ein Glasfaser-Filtermedium ist, und
(2) sich mindestens 50 Falten zwischen der ersten und der zweiten Prallplatte (254, 264) erstrecken,

28. Plattenfilterelement nach einem der Ansprüche 24 - 27 **dadurch gekennzeichnet, dass**
(a) das erste Dichtungselement (222) Polyurethan-Schaumstoff und
(b) das Mediumsieb (240) ein nicht-metallisches Material enthält.

## Revendications

1. Agencement de filtre comprenant :
(a) une construction de logement (52, 202) définissant un intérieur (71, 211) et présentant une admission d'écoulement de gaz (54, 212), un refoulement d'écoulement de gaz (56, 214) et un refoulement d'écoulement de liquide (58) ;
(b) un filtre coalesceur de premier étage (80, 204) comprenant un support, ledit filtre coalesceur de premier étage (80, 204) étant positionné de manière opérationnelle dans ledit intérieur (71, 211), ledit support (112, 270) présentant une première superficie amont ;
(c) un élément formant filtre de second étage (100, 206) positionné de manière opérationnelle dans ledit intérieur (71, 211) ;
ledit agencement de filtre étant **caractérisé en ce que**
(i) ledit élément formant filtre de second étage (100, 206) comprenant une construction de filtre à panneau ;
(ii) ladite construction de filtre à panneau présentant un support plissé (106, 224) avec une seconde superficie amont ;
(iii) ledit support comprenant un support non tissé de fibres (112, 270) et ladite première superficie amont étant différente de ladite seconde superficie amont ;
(d) un élément formant enceinte (150, 250) positionné à un emplacement dans ledit intérieur pour bloquer un écoulement de gaz en ligne droite directe depuis ledit filtre coalesceur de premier étage (80, 204) vers ledit élément formant filtre de second étage (100, 206) ; et
(e) un agencement de direction d'écoulement de gaz (52, 202) configuré pour diriger l'écoulement de gaz depuis l'admission d'écoulement de gaz (54, 212) à travers ledit filtre coalesceur de premier étage (80, 204), puis à travers l'élément formant filtre de second étage (100, 206) et vers l'extérieur à travers le refoulement d'écoulement de gaz (56, 214).

2. Agencement de filtre selon la revendication 1, dans lequel :
ledit support plissé (106, 224) comprend une pluralité de plis (106, 228) ; chacun desdits plis (106, 228) présentant une longueur orientée sensiblement normalement par rapport à une face aval dudit filtre coalesceur de premier étage (80, 204).

3. Agencement de filtre selon l'une quelconque des revendications 1 et 2, dans lequel :
(a) ledit élément formant enceinte (150, 250) comprend une chicane (160, 254) ;
(i) ladite chicane (160, 254) dirigeant le liquide coalescé vers ledit refoulement d'écoulement de liquide (58) ; et
(ii) ladite chicane (160, 254) étant entre une face aval dudit filtre coalesceur de premier étage (80, 204) et ledit élément formant filtre de second étage (100, 206) pour bloquer un écoulement de gaz en ligne droite directe depuis la face aval dudit filtre coalesceur de premier étage (80, 204) et ledit support plissé (106, 224).

4. Agencement de filtre selon l'une quelconque des revendications 1 à 3, comprenant en outre :
(a) un élément formant poignée (188, 320) fixé audit filtre coalesceur de premier étage (80, 204) destiné à aider le retrait sélectif dudit filtre coalesceur de premier étage (80, 204) dudit logement (52, 202).

5. Agencement de filtre selon la revendication 4, dans lequel :
(a) ledit élément formant poignée (188) comprend une partie de bord en saillie (190) dudit élément formant enceinte (150).

6. Agencement de filtre selon l'une quelconque des revendications 1 à 5, dans lequel :
(a) ladite construction de logement (52, 202) comprend un réservoir coalesceur (120, 218) adjacent à et en communication d'écoulement de gaz avec ladite admission d'écoulement de gaz (54, 212) ; ledit réservoir (120, 218) présentant une paroi intérieure (122, 327) ; et
(b) ledit filtre coalesceur de premier étage (80, 204) comprend un logement (114, 273) présentant une partie d'étanchéité (128, 325) ; ladite partie d'étanchéité (128, 325) comprenant un matériau polymère compressible étant suffisamment compressible pour former un joint radial (126, 330) avec ladite paroi intérieure (122, 327) dudit réservoir (120, 218) quand ledit filtre coalesceur (80, 204) est orienté à l'intérieur.

7. Agencement de filtre selon la revendication 6, dans lequel :
(a) ledit élément formant enceinte (150, 250) comprend une chicane (160) fixée audit logement de filtre coalesceur de premier étage (114, 273) ; et
(b) ladite chicane (160) et ledit réservoir coalesceur (120, 218) étant profilés de telle sorte que ledit filtre coalesceur (80) soit reçu par ledit réservoir (120, 218) dans une orientation unique au plus.

8. Agencement de filtre selon l'une quelconque des revendications 1 à 7, dans lequel :
(a) ledit élément formant filtre de second étage (100, 206) comprend :
(i) un filtre à panneau plissé présentant une pluralité de plis (106, 228), un côté amont et un côté aval ;
(ii) un écran poreux (102, 240) couvrant ledit côté aval ;
(iii) un joint d'étanchéité périphérique (94, 222) autour d'une périphérie ;
(iv) chacun desdits plis (106, 228) présentant une profondeur de pli de 12,7 - 76,2 mm (0,5 - 3 pouces) ; et
(b) ledit filtre à panneau plissé étant dimensionné et configuré pour s'installer dans ladite construction de logement (52, 202).

9. Agencement de filtre selon l'une quelconque des revendications 1 à 4, dans lequel :
(a) ledit élément formant filtre de second étage (206) comprend ledit élément formant enceinte (250) fixé à celui-ci pour empêcher un écoulement de gaz en ligne droite directe d'impacter au moins une partie dudit support plissé (106, 224).

10. Agencement de filtre selon l'une quelconque des revendications 4 et 5, dans lequel :
(a) ledit élément formant poignée (320) sur ledit filtre coalesceur de premier étage (204) comprend un agencement en saillie (320) s'étendant depuis ledit filtre coalesceur de première étage (204) ;
(i) ledit élément formant enceinte (150, 250) étant orienté pour mettre en prise ledit agencement en saillie (320) et empêcher un mouvement axial dudit filtre coalesceur de premier étage (204) dans ledit intérieur du logement (71, 211) ;

11. Agencement de filtre selon la revendication 9, dans lequel :
(a) ledit élément formant filtre de second étage (206) comprend en outre un second élément formant enceinte (262) fixé à celui-ci.

12. Agencement de filtre selon l'une quelconque des revendications 1 à 4, 9 et 10, dans lequel :
(a) ledit élément formant filtre de second étage (206) comprend une construction de filtre à panneau présentant ledit support de filtre plissé (224) et un périmètre extérieur ; ledit support de filtre plissé (224) comprenant :
(i) un support de filtre en fibre de verre ;
(ii) au moins 40 plis s'étendant entre une première extrémité et une seconde extrémité de ladite construction de filtre à panneau ;
(b) un élément formant joint extérieur (222) le long dudit périmètre extérieur comprenant un matériau polymère ;
(c) un écran de support (240) positionné en relation couvrante par rapport audit support de filtre plissé (224) ;
(i) ledit élément formant enceinte (250) étant au niveau de ladite première extrémité.

13. Agencement de filtre selon la revendication 12, dans lequel :
(a) ledit élément formant enceinte (250) est plus long qu'une profondeur desdits plis.

14. Agencement de filtre selon la revendication 10, dans lequel :
(a) ledit filtre coalesceur de premier étage (204) comprend :
(i) une construction de cadre (274) fixant ledit support non tissé de fibres (270) ;
(A) ledit agencement en saillie (320) étant une partie intégrante de ladite construction de cadre (274) ; et
(ii) une périphérie extérieure présentant un élément formant joint (325) positionné le long de celle-ci ;
(A) l'élément formant joint (325) destiné à créer un joint (330) avec ladite construction de logement (52, 202), quand le filtre coalesceur de premier étage (204) est positionné de manière opérationnelle dans ladite construction de logement (52, 202).

15. Agencement de filtre selon l'une quelconque des revendications 10 et 14, dans lequel :
(a) ledit agencement en saillie (320) comprend une pluralité de languettes (322) s'étendant depuis ledit filtre coalesceur de premier étage (204).

16. Agencement de filtre selon la revendication 14, dans lequel :
(a) ladite construction de cadre (274) comprend des première et seconde pièces (278, 280) construites et agencées pour s'entrecroiser ;
(i) ladite première pièce de cadre (278) présentant un premier écran intégré (312) ;
(ii) ladite seconde pièce de cadre (280) présentant un second écran intégré (314) ;
(iii) ledit support non tissé de fibres (270) étant enfermé entre lesdits premier et second écrans (312, 314).

17. Agencement de filtre selon la revendication 16, dans lequel :
(a) lesdites première et seconde pièces de cadre (278, 280) présentent chacune des périphéries extérieures généralement circulaires ; et
(b) ledit élément formant joint (325) est moulé autour de ladite construction de cadre (274).

18. Filtre coalesceur (80) comprenant :
(a) une région de support (112) présentant un premier côté et un second côté opposé ;
(i) ladite région de support (112) comprenant une région de support fibreux non tissé ;
(ii) ledit premier côté de ladite région de support présentant une première superficie exposée ; et
(b) un logement compressible moulé en polymère (114) présentant des premier et second côtés opposés et une périphérie extérieure ;
(i) ledit premier côté du logement présentant une première surface avec une ouverture d'écoulement de gaz à l'intérieur ;
(ii) ladite région de support (112) étant positionnée à l'intérieur dudit logement avec ledit premier côté dudit support exposé par ladite ouverture d'écoulement de gaz dans ledit premier côté de logement ;
(iii) ledit second côté du logement présentant une seconde surface avec ouverture d'écoulement de gaz à l'intérieur ;
(iv) ladite région de support (112) étant positionnée à l'intérieur dudit logement avec ledit second côté du logement exposé par ladite ouverture d'écoulement de gaz dans ledit second côté du logement ;
(v) ledit logement (114) étant compressible pour former un élément formant joint (114) positionné le long de la périphérie extérieure ;
et une bague de support (124) moulée à l'intérieur dudit logement (114).

19. Filtre coalesceur selon la revendication 18, comprenant en outre :
(a) une chicane (160) orientée adjacente audit second côté du logement.

20. Filtre coalesceur selon la revendication 19, dans lequel :
(a) ledit logement (114) est circulaire ;
(b) ladite bague de support (124) comprend une bague rigide moulée à l'intérieur dudit logement (114) ; et
(c) ladite chicane (160) est fixée à ladite bague.

21. Filtre coalesceur selon l'une quelconque des revendications 18 à 20, dans lequel :
(a) ledit élément formant joint (114, 325) comprend un construction à étape (130, 336).

22. Filtre coalesceur selon l'une quelconque des revendications 18 à 21, dans lequel :
(a) ledit élément formant joint (114, 325) comprend du polyuréthane en mousse.

23. Filtre coalesceur selon l'une quelconque des revendications 18 à 22, dans lequel :
(a) ladite région de support (112, 272) comprend un support fibreux présentant une solidité à l'état libre non supérieure à 1,8 % et un diamètre de fibre moyen non supérieur à 25 µm.

24. Elément de filtre à panneau (100, 206) comprenant :
(a) une construction de filtre présentant un support de filtre plissé (224) et un périmètre extérieur ;
(i) ledit support plissé (224) présentant un côté amont et un côté opposé aval ;
(b) un élément formant joint extérieur (222) le long dudit périmètre extérieur comprenant un matériau polymère ;
(c) un écran de support (240) positionné en relation couvrante par rapport audit support de filtre plissé ;
(i) ledit écran de support (240) présentant une taille de grille d'au moins 2,54 par 2,54 mm (0,1 pouce par 0,1 pouce) :
(ii) ledit écran de support (240) étant orienté adjacent audit côté aval dudit support plissé (224) ;
(d) ledit support plissé (224) comprenant une pluralité de plis (228) ; chacun desdits plis présentant une profondeur (234) s'étendant dans une direction généralement transversale audit écran de support (240) ; et
(e) au moins une première chicane imperméable au gaz (254) ;
(i) ladite chicane (254) s'étendant dans une même direction que ledit pli depuis ledit côté aval dudit support plissé (224) vers ledit côté amont dudit support plissé (224).

25. Elément de filtre à panneau selon la revendication 24, comprenant en outre :
(a) une seconde chicane imperméable au gaz (264) s'étendant dans une même direction que ladite première chicane (254) ;
(i) ladite première chicane (254) et ladite seconde chicane (264) étant situées à des extrémités opposées de ladite construction de filtre.

26. Elément de filtre à panneau selon la revendication 25, dans lequel :
(a) ladite première chicane (254) s'étend sur une longueur supérieure à ladite profondeur de pli et une longueur supérieure à ladite seconde chicane (264).

27. Elément de filtre à panneau selon l'une quelconque des revendications 25 et 26, dans lequel :
(a) ledit support de filtre plissé (224) comprend :
(i) un support de filtre en fibre de verre ; et
(ii) au moins 50 plis s'étendant entre lesdites première et seconde chicanes (254, 264).

28. Elément de filtre à panneau selon l'une quelconque des revendications 24 à 27, dans lequel :
(a) ledit élément formant joint extérieur (222) comprend du polyuréthane en mousse ;
(b) ledit écran de support (240) comprend un matériau non métallique.
